(19) Europäisches Patentamt
European Patent Office
Office européen des brevets

(11) Veröffentlichungsnummer: **0 037 543**
**B1**

(12) # EUROPÄISCHE PATENTSCHRIFT

(45) Veröffentlichungstag der Patentschrift: **28.12.83**

(51) Int. Cl.$^3$: **A 22 C 13/00**

(21) Anmeldenummer: **81102378.7**

(22) Anmeldetag: **30.03.81**

(54) **Für Lebensmittel, insbesondere Wurstwaren geeignete Schlauchhülle mit einer Klebenaht und Verfahren zu ihrer Herstellung.**

(30) Priorität: **05.04.80 DE 3013320**

(43) Veröffentlichungstag der Anmeldung:
**14.10.81 Patentblatt 81/41**

(45) Bekanntmachung des Hinweises auf die Patenterteilung:
**28.12.83 Patentblatt 83/52**

(84) Benannte Vertragsstaaten:
**AT BE CH DE FR GB IT LI LU NL SE**

(56) Entgegenhaltungen:
**EP - A - 0 014 346**
**EP - A - 0 014 353**
**DE - C - 886 863**
**FR - A - 2 102 508**

(73) Patentinhaber: **HOECHST AKTIENGESELLSCHAFT**
**Postfach 80 03 20**
**D-6230 Frankfurt am Main 80 (DE)**

(72) Erfinder: **Andrä, Klaus, Dr.**
**Konrad-Adenauer-Strasse 10**
**D-6501 Zornheim (DE)**
Erfinder: **Hutschenreuter, Elfriede**
**Hardtstrasse 116**
**D-6208 Bad Schwalbach (DE)**
Erfinder: **Seifried, Walter, Dr.**
**Am Güldenplan 9**
**D-6200 Wiesbaden (DE)**

**EP 0 037 543 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Für Lebensmittel, insbesondere Wurstwaren geeignete Schlauchhülle mit einer Klebenaht und Verfahren zu ihrer Herstellung

Die Erfindung bezieht sich auf eine Schlauchhülle von der im Oberbegriff des Anspruchs 1 genannten Art und auf ein Verfahren zu ihrer Herstellung.

Eine Schlauchhülle dieser Art wird aus einer Bahn, beispielsweise aus regenerierter Cellulose, durch längsaxiales Falten und Verkleben der sich überlappenden längsaxial sich erstreckenden Randzonen hergestellt (US—A—2,148,884, US—A—2,226,442, US—A—2,685,769, US—A—2,685,770, US—A—2,757,495). Bei den bisher beschriebenen Verklebungen handelt es sich allerdings entweder um die Anwendung von Lösungsmitteln, mit denen die Oberfläche der Bahn angelöst und klebrig gemacht wird, wobei ein "Klebstoff" in situ auf der Bahnoberfläche erzeugt wird, oder um Bahnen, die mit einem thermoplastischen Harz überzogen sind oder aus einem thermoplastischen Material bestehen, das bei Anwendung von Wärme und Druck siegelfähig ist (US—A—2,773,773). In der US—A—2,653,432 werden als geeignete Harze z.B. auch Acrylsäureester genannt, die durch Anwendung von Wärme oder mit einem Lösungsmittel klebrig gemacht werden. Ferner wurde auch schon vorgeschlagen, eine saure Lösung eines wasserlöslichen, teilweise polymerisierten hitzehärtbaren Harzes als klebendes Mittel zu verwenden, wobei die Polymerisation des Harzes durch die Gegenwart einer Säure (pH 4,5—5,5) in der wäßrigen Lösung beschleunigt wird. In der US—A—2,607,696 werden als Beispiele für diese Harze Aminoplastharze, wie Harnstoff-Formaldehyd- oder Melamin-Formaldehyd-Harz, Keton-Formaldehyd-Harze und Phenolharze genannt, die bei 180 bis 220°C gehärtet werden und dabei die sich gegenseitig überlappenden aufeinander gepreßten Randbereiche verkleben. In der US—A—2,686,725 wird vorgeschlagen, das hitzehärtbare Harz z.B. Melamin-Formaldehyd-Harz, in saurer Lösung z.B. auf das noch feuchte und noch nicht getrocknete faserfreie Cellulosegel aufzubringen und auf das anschließend gehärtete Harz eine Heißsiegelschicht aus Polyäthylenharz in Form eines Bandes oder als Pulver aufzuschmelzen. Zum Verbinden der sich überlappenden Randbereiche der Cellulosehydratbahn wird das Polyäthylen unter Anwendung von Druck und erhöhter Temperatur geschmolzen, wobei die sich überlappenden Ränder miteinander hitzegesiegelt werden.

Allen diesen Schlauchhüllen ist gemeinsam, daß sie nur relativ umständlich hergestellt werden können, nämlich bei hohen Temperaturen, bei langen Verweilzeiten bis zum Abbinden des Klebstoffs und unter Zuhilfenahme von Säuren oder organischen Lösungsmitteln, die nur schwer und mit sehr aufwendigen Maßnahmen aus der Schlauchhülle entfernt werden können. Ferner sind sie im Verklebungsbereich nicht ausreichend gas- und rauchdurchlässig. Aus diesen Gründen wurden seit vielen Jahren Schlauchhüllen überwiegend nahtlos hergestellt, obwohl dieses Rundspinnverfahren wegen relativ langsamer Bahngeschwindigkeit sehr kostenintensiv ist und nur begrenzte Schlauchdurchmesser erlaubt. Außerdem ist eine gleichmäßige Ausbildung von Schlauchdurchmesser und Wandstärke nur unvollkommen möglich und Veredelungsprozesse, z.B. Innenbeschichtung, sehr kompliziert und aufwendig durchzuführen. Auch gibt es seit vielen Jahren kaum noch Veröffentlichungen auf dem Gebiet der mit einer Längsnaht versehenen Schlauchhüllen, die einen Hinweis geben könnten, wie die genannten Probleme überwunden werden könnten.

Es ist deshalb Aufgabe der vorliegenden Erfindung, eine Schlauchhülle der eingangs genannten Art und ein Verfahren zu ihrer Herstellung vorzuschlagen, die auf relativ einfache und billige Weise, nämlich bei normalen Raumtemperaturen, kürzeren Verweilzeiten und ohne Zuhilfenahme von Säuren und zusätzlichen Lösungsmitteln durch Verkleben ihrer beiden längsaxialen Randbereiche hergestellt werden kann. Die Schlauchhülle muß geeignet sein zur Verpackung von Lebensmitteln, insbesondere Wurstmassen, d.h. die Schlauchhülle und insbesondere die Verklebungsnaht muß relativ hohen mechanischen und thermischen Belastungen, z.B. Dehnungsbelastungen und der Einwirkung von heißem Wasser, standhalten und den Geschmack und das Aussehen des Lebensmittels nicht beeinträchtigen. Weiterhin muß ein faltenfreier, möglichst gleichmäßiger Querschnitt der Schlauchhülle gegeben sein. Eine wesentliche Aufgabe der vorliegenden Erfindung ist ferner darin zu sehen, die Gas- und Rauchdurchlässigkeit der Verklebungsnaht zu ermöglichen bei gleichzeitig großer Reißkraft.

Diese Aufgabe wird überraschenderweise gelöst mit der im Anspruch 1 genannten Schlauchhülle. Die Ansprüche 2 bis 14 geben weitere Ausführungsformen der Schlauchhülle an. Die Aufgabe wird ferner gelöst durch ein Verfahren zur Herstellung der Schlauchhülle mit den im Anspruch 15 genannten Merkmalen. Die Ansprüche 16 bis 20 beschreiben weitere Ausbildungen des Verfahrens.

Die Bildung einer Schlauchhülle mit einer oder mehreren längsaxial sich erstreckenden Nähten durch Verklebung der Randbereiche der längsaxial sich erstreckenden Ranzonen ist an sich bekannt, wozu auf die eingangs aufgeführten US-PSen verwiesen wird.

Entsprechend der vorliegenden Erfindung wird ein um seine Längsachse gebogener, blatt- oder bahnförmiger rechteckiger Folienzuschnitt oder eine entsprechend gebogene, z.B. endlose Folienbahn durch Überlappung und Verklebung der längsaxial sich erstreckenden Randbereiche in eine Schlauchhülle mit einer längsaxial sich erstreckenden Verbindungsnaht übergeführt. Der Einfachheit halber wird im folgenden anstelle von "blatt- oder bahnförmigen Zuschnitten" und "endlosen Bahnen" nur von Bahnen gesprochen. Die Klebstoff enthaltende Schicht im Überlappungsbereich kann die Form eines Bandes, Fadens oder Streifens aufweisen. Es ist auch möglich, die Randzonen in der Weise miteinander

zu verbinden, daß die Ränder bündig, d.h. mit den Kanten zumindest im wesentlichen aneinanderstoßend einander genähert werden und dann mit einem Klebstoff mit einem Band oder Film- bzw. Folienstreifen, das bzw. der beide Randzonen überdeckt, miteinander verbunden werden. Der Folienstreifen befindet sich dann auf der Außenseite oder Innenseite der Schlauchhülle, oder es werden parallel zueinander verlaufende Folienstreifen verwendet, von denen sich dann einer auf der Innenseite und einer auf der Außenseite der Schlauchhülle befindet. Ein Band, Film- oder Folienstreifen kann auch verwendet werden, wenn die Randzonen sich überlappen. Er zeigt dann auf beiden Oberflächen eine Klebstoffschicht, von denen mindestens eine einen Haftklebstoff enthält, und ist zwischen den überlappenden Randzonen angeordnet.

Der Folienstreifen besteht vorzugsweise aus dem gleichen Material wie die Schlauchhülle, z.B. aus Cellulosehydrat. Es ist aber auch möglich, einen Folienstreifen aus Papier oder eine streckorientierte Kunststoffolie wie Polyester-, Polyvinylchlorid- oder Polypropylen-Folie oder einen Folienverbund aus zwei oder mehr Folien, z.B. mit einer Aluminiumfolie, oder einen Vliesstoff, z.B. einen adhäsiv, mechanisch oder thermisch verfestigten Faservliesstoff aus wirr oder geordnet abgelegten Spinnfasern, Filamenten oder multiplen Filamentgarnen aus synthetischem oder nativem Material, oder eine Schaumfolie mit offenporiger oder geschlossenporiger Schaumstruktur, z.B. aus Polyurethan oder Polystyrol, zu verwenden.

Auch mikroporöse Folien sind geeignet, worunter auch Membranen mit einem Porendurchmesser zu verstehen sind, wie sie beispielsweise Membranen besitzen, die bei der Reversosmose, Ultrafiltration, Dialyse oder Hämofiltration oder als Batterien- oder Brennstoffzellen-Diaphragmen eingesetzt werden. Solche mikroporösen Folien werden beispielsweise hergestellt, indem man eine pulverisierte Substanz, beispielsweise Polystyrol, Stärke, Zucker, Natriumchlorid oder Natriumcarbonat, mit dem Basismaterial mischt, einen Flächenkörper bildet und zur Porenbildung die pulverisierte Substanz extrahiert (US—A—3,852,224). Es ist auch möglich, feinpulverige thermoplastische Kunststoffe erhöhten Temperaturen auszusetzen, wobei man duch Sintern einen Körper mit mikroporöser Struktur erhält. Mittels eines anderen Verfahrens wird das in einem thermoplastischen Kunststoff adsorbierte Gas in der Hitze ausgedehnt, wobei andererseits das Gas auch durch Zusatz eines in der Hitze gasbildenden Mittels erzeugt werden kann. Poröse Flächenkörper können auch gebildet werden, indem man ein organisches Polymeres mit zwei flüchtigen, miteinander mischbaren Lösungsmitteln mischt, das Gemisch in einer Schicht ausbreitet und die Lösungsmittel verflüchtigt, wobei das polymere Material unter Bildung einer porösen Struktur koaguliert. Das Polymere ist bei diesem Verfahren in dem einen Lösungsmittel schwer oder nicht löslich. Schließlich sind auch Verfahren bekannt, bei denen das polymere Material in einem Lösungsmittel gelöst wird und danach zur Koagulation mit einem flüssigen, mit dem Lösungsmittel mischbaren Fällmittel in Berührung gebracht wird.

Für Nahrungsmittel, die geräuchert werden sollen, z.B. Brühwürste, Rohwürste oder bestimmte Käsearten, sind insbesondere perforierte oder gelochte Folienstreifen geeignet oder die genannten Vliesstoffe, Schaumstoff-folien und mikroporösen Folien, die aufgrund ihrer Struktur oder ihrer chemischen Zusammensetzung fähig sind, den Räucherrauch durch die Verbindungsnaht der Schlauchhülle durchtreten zu lassen. Auch sind Bänder aus engmaschigem Gewebe, Netzwerk oder Gitter, die z.B. aus Fäden in Kette und Schuß gewebt sind, als rauchdurchlässige Folienstreifen zur Verbindung der Randzonen geeignet.

Auch kompakte Folienstreifen aus rauchdurchlässigem Material, z.B. Folienstreifen aus Celluloseregenerat, sind verwendbar, wobei dann eine zusätzliche rauchdurchlässige Struktur des Folienstreifens, z.B. in Form von Poren oder Lochungen, nicht erforderlich ist.

Zusätzlich ist bei der Verpackungshülle, sofern sie für zu räuchernde Nahrungsmittel verwendet werden soll, eine ausreichende Rauchdurchlässigkeit der Klebstoff enthaltenden Schicht vorzusehen, wie weiter unten noch ausgeführt wird.

Als Basismaterial für die Herstellung der Verpackungshülle dienen Bahnen aus Cellulose (Zellglas, regenerierte Cellulose, Cellulosehydrat) und Cellulosederivaten, wie Celluloseäther, Proteine, Kohlenhydrate, Kollagenen, Alginaten, Stärken, und anderen natürlichen oder synthetischen polymeren Materialien. So können Cellulosebahnen, die nach dem Viskoseverfahren (US—A—3,884,270), durch Denitrierung von Cellulosenitrat oder Hydrolyse anderer Celluloseester, z.B. Deacetylierung von Celluloseacetat mit wäßrigen oder alkoholischer Alkalilösung (US—A—3,546,209) hergestellt wurden, eingesetzt werden. Auch andere Cellulosematerialien wie Celluloseäther, z.B. Alkyl- oder Hydroxyalkylcellulose oder Mischäther, können zu Schläuchen verklebt werden.

Es können auch Bahnen verwendet werden, die eine Faserverstärkung, insbesondere eine bahnförmige Faserverstärkung, z.B. eine Papierbahn, aufweisen, beispielsweise auch mit Fasern wie sie bei der Herstellung von Papier oder Reispapierverwendet werden, oder mit nativen Fasern wie Hanf- oder Flachsfasern, oder mit synthetischen Fasern wie Polyamid-, Polyester- oder Polyacrylnitril-Fasern. Die bahnförmige Faserverstärkung ist z.B. ein textiles Gebilde wie in adhäsiv, mechanisch oder thermisch verfestigter Faservliesstoff aus wirr oder geordnet abgelegten Spinnfasern, Filamenten oder multiplen Filamentgarnen aus nativem oder synthetischem Material, ein Gewebe, Netzwerk, Gitter, Gewirke oder dergleichen.

Die Faserbahn wird vorzugsweise beidseitig mit einer Viskoselösung behandelt, insbesondere in eine Viskoselösung getaucht oder mit einer Viskoselösung beschichtet, z.B. mit Düsen, Walzen oder

durch Sprühvorrichtungen, und anschließend in regenerierte Cellulose übergeführt. Es ist auch möglich, in die Viskose 10 bis 80 Gew.-% Verstärkungsfasern einzuarbeiten, die zweckmäßigerweise eine mittlere Faserlänge von 0,05 bis 15 mm aufweisen. Die Fasern bestehen aus organischen Kunstfasern, aus Naturfasern, z.B. Baumwollfasern oder aus Fibriden (US—A—2,999,788). Die Fasern enthaltende Viskose wird dann durch eine Düse in das Koagulationsbad ausgepreßt unter Bildung einer Gelbahn.

Die Viskoselösung wird üblicherweise hergestellt durch Umsetzung der aus Cellulose mit Natriumhydroxidlösung erhaltenen Alkalicellulose mit Schwefelkohlenstoff im alkalischen Medium; sie enthält meist noch 4 bis 20 Gew.-% Cellulose. Nach der Reifung wird die Viskose versponnen, d.h. koaguliert. Das Spinnbad enthält beispielsweise 10 bis 20 Gew.-% Schwefelsäure, ferner Natriumsulfat und/oder Ammoniumsulfat.

In weiteren Stufen wird das aus Viskose-Gel bestehende faserverstärkte bahnförmige Produkt in saurem Medium, z.B. in verdünnter (kleiner/gleich 5 Gew.-%) Schwefelsäure, zu Cellulosehydrat-Gel regeneriert, zur Entfernung von Säure und Salzen mit Wasser gewaschen, mit z.B. Natriumsulfitlösung entschwefelt, gegebenenfalls durch ein Bleichbad und schließlich durch ein Weichmacherbad mit z.B. wäßriger 10 bis 20%iger Glycerin-, Sorbit- oder Glucoselösung (FR—A—1 385 394) geführt.

Das Cellulosehydrat-Gel wird durch intensive Trocknung bei 90 bis 140°C in regenerierte Cellulose übergeführt und duch Konditionierung auf einen Wassergehalt von etwa 5 bis 10 Gew.-% eingestellt. Die Cellulosehydratbahnen zeigen eine Dicke von 20 bis 50 $\mu$m entsprechend einem Flächengewicht von 27 bis 75 g/m$^2$.

Unter Haftvermittler in bezug auf Klebstoffe sind bekanntlich Stoffe oder Stoffgemische zu verstehen, die vor dem Klebstoffauftrag auf eine oder beide Klebflächen aufgebracht werden, um die Haftung zwischen Klebstoff und Klebflächen zu verbessern. Im vorliegenden Fall hat er die Aufgabe, die Haftkleberschicht auf der Bahn und/oder Folienstreifen naßfest zu verankern. Er befindet sich zwischen der Haftkleberschicht und der Bahn und falls erforderlich zwischen der Haftkleberschicht und dem Folienstreifen.

Obwohl die haftvermittelnde Harzschicht im Prinzip nur im Bereich der zu verklebenden Flächen der endlosen Bahn vorhanden sein müßte, ist es aus technischen Gründen zweckmäßig, eine Oberfläche, für bestimmte Anwendungen oder überlappende Klebungen auch beide Oberflächen, der Bahn vollflächig mit einer oder zwei verschiedenen haftvermittelnden Harzschichten zu versehen. Zusätzlich kann die Bahn auf der die spätere Innenseite der Schlauchhülle bildenden Oberfläche ein übliches Mittel zur Verbesserung der Schälbarkeit der Schlauchhülle oder eine gasundurchlässige Schicht aufweisen. Zu den ersten Mitteln zählen z.B. wasserlösliche Proteine, wie Gelatin, Eialbumin und Glutenin. Diese Mittel sind allerdings nur bei speziell haftvermittelnden Harzen erforderlich, bei gehärteten, kationischen hitzehärtbaren Harzen auf der Innenseite der Schlauchhülle ist bereits ohne zusätzliches Mittel eine ausreichende Schälbarkeit gewährleistet.

Das im wesentlichen wasserunlösliche, haftvermittelnde Harz ist vorzugsweise ein gehärtetes, kationisches, hitzehärtbares Harz, das in ungehärtetem Zustand im wesentlichen wasserlöslich ist und durch Wärmeeinwirkung durch fortschreitende Kondensationsreaktion in wasserunlöslichen Zustand überführbar ist (US—A—3,378,379). Auch Vinyliden-Gruppen enthaltende Copolymerisate (US—A—2,748,027, US—A—2,961,323, US—A—2,961,340, US—A—3,108,017, US—A—3,144,425, US—A—3,826,676, DE—A—28 32 926) ergeben zusammen mit Haftklebstoffen hervorragend feste Nähte bei der Verklebung der Naht unter Ausbildung der Schlauchhülle, wobei eine zusätzliche wasserdampf- und sauerstoffsperrende Wirkung erzielt wird. Polyurethanharze, Nitrocellulose und andere, als wasserunlösliche Verankerungsmittel bekannte Polymere können ebenfalls eingesetzt werden.

Die Auswahl des wasserunlöslichen, haftvermittelnden Harzes hängt unter anderem ab von der späteren Verwendung der Schlauchhülle. Für Brühwürste, deren Hüllen gegenüber Wasserdampf und Rauch durchlässig sein müssen, werden vorzugsweise gehärtete, kationische hitzehärtbare Harze als Verankerungsmittel verwendet. Hierzu wird z.B. die Bahn aus Cellulosehydrat mit einer wäßrigen Lösung überzogen, die bis zu 25 Gew.-% eines dispergierbaren, wärmehärtbaren Harzes enthält, und das überzogene Material so lange auf 65 bis 125°C erhitzt, bis der Feuchtigkeitsgehalt unter 10 Gew.-% liegt. Durch das Erhitzen wird das Harz zu seiner wasserunlöslichen Form gehärtet und geht eine dauerhafte Bindung mit der Oberfläche der Bahn ein. Vorzugsweise wird die Überzugslösung bei der Herstellung der Bahn aus Cellulosehydrat auf die bereits regenerierte, aber noch nicht getrocknete Gelbahn aufgebracht. Dieser Auftrag kann vor, gleichzeitig oder nach der Behandlung der Gelbahn mit einem Weichmacher, wie z.B. einem Polyol, vorgenommen werden. Die Harzschicht hat ein Flächengewicht von etwa 30—300 mg/m$^2$, vorzugsweise 40 bis 75 mg/m$^2$.

Als geeignete Lösungsmittel für das hitzehärtbare Harz werden niedrige aliphatische oder aromatische Kohlenwasserstoffe, niedrige Alkohole oder Ester oder Mischungen dieser Lösungsmittel eingesetzt. Vorteilhaft wird eine wäßrige Lösung oder Dispersion verwendet.

Falls für bestimmte Anwendungen gewünscht, wird zusammen mit dem hitzehärtbaren Harz ein zusätzliches wasserabstoßendes Harz wie Paraffin, Montanwachs, Carnaubawachs und/oder geeignete Verdickungsmittel, wie Celluloseäther oder Stärke, auf die Schlauchhülle aufgetragen.

Die Schlauchhülle kann auch vor, vorzugsweise aber nach Aufbringen des hitzehärtbaren Harzes und vor dem Verkleben mit Beschriftungen oder dekorativen Mustern bedruckt werden, wobei neben

dem bei der Herstellung von nahtlosen Wursthüllen üblichen Druckverfahren noch weitere Druckmöglichkeiten sich anbieten, da im vorliegenden Fall die flache Bahn vor der Schlauchformung bedruckt werden kann.

Der Überzug aus hitzehärtbarem Harz ist beispielsweise frei von Pigmenten und organischen Farben und bildet somit eine klare Schicht, durch die eine eventuelle Bedruckung gut sichtbar bleibt. Es kann aber auch ein transparenter organischer Farbstoff verwendet werden, um der Verpackungshülle eine entsprechende Farbe zu verleihen.

Neben dem hitzehärtbaren Harz enthält die Schicht auf der Schlauchhülle im Bereich der Verbindungsnaht gegebenenfalls Pigmente, einen Weichmacher für das hitzehärtbare Harz und/oder ein Härtungsmittel für das hitzehärtbare Harz. Das hitzehärtbare Harz und der Weichmacher werden in einem geeigneten flüssigen Lösungs- bzw. Dispergiermittel aufgenommen, das vorteilhafterweise bei einer Temperatur verdampft werden kann, bei der gleichzeitig zumindest eine Vorhärtung des Harzes eintreten kann.

Als Beispiele für das hitzehärtbare Harz sind zu nennen: Harnstoff-Aldehyd-, Melamin-Aldehyd- und Phenol-Aldehyd-Harze. Als bevorzugter Weichmacher für diese hitzehärtbaren Harze dienen weiche, nicht-härtbare Harze vom Alkyd-Typ oder auch Dibutylphthalat, Trikresylphosphate oder Dibutylsebacat.

Als Härter für das hitzehärtbare Harz kann beispielsweise Ammoniumthiocyanat, Toluolsulfonsäure, Maleinsäure oder Milchsäure eingesetzt werden. Diese Verbindungen verhalten sich wie Katalysatoren bei der Härtung der hitzehärtbaren Harze.

Weitere geeignete hitzehärtbare Harze sind Kondensationsprodukte von Polyamidpolyamin oder aliphatischen Polyaminen oder von Polyamiden mit bifunktionellen Halohydrinen oder deren Derivaten wie z.B. Epichlorhydrin, wie sie beispielsweise in der US—A—2,573,956 oder in den GB—A—865,727 und GB—A—908,205 beschrieben sind. Ein besonders geeignetes Harz ist beispielsweise das Reaktionsprodukt aus aliphatischem 2,6-Polyamid, Äthylentriamin und Epichlorhydrin.

Als Polyamine kommen einfache Alkylendiamine in Betracht oder Polyalkylenpolyamine wie beispielsweise Diäthylentriamin, Triäthylentetramin, Tetraäthylenpentamin und die entsprechenden Polypropylenpolyamine, und Polybutylenpolyamine wie Dibutylentriamin. Die Polyamine werden zur Herstellung der entsprechenden Chlorhydrinharze mit mehr als einem Mol Epichlorhydrin je Mol Polyamin umgesetzt. Im allgemeinen werden von 1,5 bis 4,0 Mol Epichlorhydrin, meist 2 bis 3 Mol angewendet. Die Umsetzung erfolgt in wäßriger Lösung, bei mäßig erhöhter Temperatur (etwa 50°C), bis der gewünschte Viskositätsgrad erreicht ist. Vorzugsweise verwendet man Umsetzungsprodukte von Epichlorhydrin mit Dipropylentriamin oder mit Bis(3-Aminopropyl)methylamin, wobei man 2,8 bis 3,8 Mol Epichlorhydrin mit 1 Mol Polyamin umsetzt.

Die Polyamid-Polyamine sind Kondensationsprodukte einer gesättigten, aliphatischen, zweibasischen Säure, die 3 bis 8 Kohlenstoffatome im Molekül aufweist mit einem der oben genannten Polyamine, das mindestens eine sekundäre und zwei primäre Amingruppen aufweist, wie beispielsweise die oben genannten Polyalkylenpolyamine. Vorzugsweise werden Diglykolsäure, Bernsteinsäure, Glutarsäure und Adipinsäure als zweibasische Säure verwendet. Es können auch Gemische zweibasischer Säuren verwendet werden. Die Gemische der Säuren können auch mehr als acht Kohlenstoffatome im Molekül aufweisende Säuren enthalten, sofern deren Anteil an der Mischung nicht verhindert, daß das daraus hergestellte Polyamin-Polyamid in Wasser echt löslich oder wenigstens kolloidal löslich ist. Ein Teil der Polyamine, die mit der zweibasischen Säure umgesetzt werden, kann durch Alkylendiamine ersetzt sein. Deren Anteil kann bis zu 30% betragen. Die Umsetzung zwischen dem Polyamin und der zweibasischen Säure wird bei etwa 110 bis 250°C, meist bei etwa 160 bis 210°C, durchgeführt. Etwa 0,8 bis 1,4 Mol der Säure werden je Mol Polyamin angewendet. Die erhaltenen Polyamin-Polyamide werden in wässriger Lösung bei etwa 50°C mit 0,5 bis 1,8 Mol Epichlorhydrin je sekundäre Aminogruppe umgesetzt, vorzugsweise verwendet man etwa 0,9 bis 1,5 Mol Epichlorhydrin.

Das Harz wird in einer wäßrigen Lösung, die etwa 0,3 bis 2,0 Gew.-%, vorzugsweise 1 bis 1,3 Gew.-% des Chlorhydrinharzes enthält, auf die für die Beschichtung vorgesehene Bahn aufgetragen, bei der eventuelle faserverstärkten, Cellulosebahn wird es vorzugsweise auf die noch feuchte, noch nicht getrocknete Gel-Bahn aufgebracht. Man kann die wäßrige Lösung jedoch auch auftragen, nachdem die Cellulosebahn getrocknet worden ist, was zwar den Vorteil hat, daß man Lösungen mit geringerem Gehalt an Harz zur Erzielung der gleichen Wirkung benötigt, was jedoch gelegentlich zu ungleichmäßiger Imprägnierung führt. Nach dem Auftragen der wäßrigen Lösung des Verankerungsmittels wird die Bahn bei mäßiger Wärme (etwa 100°C) getrocknet.

Die Permeationseigenschaften der Verpackungshülle im Verklebungsbereich werden durch die Verankerungsschicht aus dem gehärteten, kationischen, hitzehärtbaren Harz nicht oder nur unwesentlich beeinflußt. Diese Eigenschaft ist von besonderer Bedeutung für die Durchlässigkeit gegenüber Wasserdampf und Räucherrauch, wenn die Schlauchhülle für Dauerwurstwaren oder Brühwürste verwendet wird. Bei zu geringer Durchlässigkeit würde sich z.B. der typische rötlich-braune Farbton des geräucherten Wurstbräts nicht einstellen.

Unter Haftklebstoff wird im Sinne der Erfindung ein dauerklebriger Stoff verstanden, der in lösungsmittelfreier oder dispergiermittelfreier Form an den meisten Werkstoffoberflächen bei

Raumtemperatur schon unter leichtem Andruck spontan haftet. Er wird auch als "Pressure sensitive adhesive" bezeichnet. Im vorliegenden Fall wird er entweder direkt in Form einer Dispersion, Lösung, z.B. in Benzin, Siedebereich 65 bis 95°C, Aceton, Essigester, Toluol, chlorierten Kohlenwasserstoffen oder in Lösungsmittelgemischen, z.B. Aceton/Benzin, oder Schmelze auf die Überlappungsflächen aufgebracht. Es ist aber auch möglich, die Haftklebstoffschicht zunächst als dünnen Film auf ein Trägerband aufzubringen, das aus einem antiadhäsiv ausgerüsteten Material, z.B. aus Siliconpapier oder aus siliconisierter Kunststoffolie, besteht. Der Haftklebstoff wird dann auf die Überlappungsflächen übertragen und danach das antiadhäsiv ausgerüstete Trägerband vom Haftklebstoff-Film abgezogen. Wird ein Folienstreifen zur Verbindung der Randbereiche der längsaxial sich erstreckenden Randzonen der Bahn verwendet, so wird der Haftkleber vorteilhafterweise zunächst auf den Folienstreifen aufgebracht. Anschliessend wird der Folienstreifen zum Verkleben der Randzonen mit der Haftkleberschicht auf die Randzonen aufgedrückt.

Es ist auch möglich einen Folienstreifen, z.B. aus Cellulosehydrat oder Polyester, mit beidseitiger Haftklebstoffbeschichtung zu verwenden. Dieser Folienstreifen wird mit einer seiner beiden klebenden Oberflächen auf eine der beiden längsaxial sich erstreckenden Randzonen der endlosen Bahn in längsaxialer Richtung ganzflächig aufgeklebt, während die andere klebende Oberfläche des Folienstreifens noch mit einem abziehbaren Band abgedeckt ist. Danach wird der Schlauch unter Überlappung der beiden längsaxial sich erstreckenden Randzonen der Bahn geformt, wobei sich der Folienstreifen in der Überlappung zwischen den Randzonen befindet. Nach Abziehen des Schutzbandes von der zweiten klebenden Oberfläche wird diese mit der zweiten Randzone verklebt.

Im Gegensatz zur Beschichtung der Bahn mit dem haftvermittelnden Harz sollte der Auftrag des Haftklebstoffs nicht über die gesamte Fläche der Bahn, sondern nur im gewünschten Verklebungsbereich erfolgen. Es werden deshalb gewöhnlich aus der mit haftvermittelndem Harz beschichteten Bahn entsprechende Streifen geschnitten, deren Breite etwa dem Umfang der zu bildenden Schlauchhülle einschließlich doppelter Überlappungsbreite der Randzonen entspricht. Diese Streifen werden dann, wie oben beschrieben, mit der Haftklebstoffschicht entlang eines der beiden längsaxial sich erstreckenden Rändern versehen.

Als Rohstoff für den Haftklebstoff dienen vorzugsweise Polyacrylsäureester oder Polymethacrylsäureester, jedoch sind im Prinzip auch andere Haftklebstoffe geeignet, sofern sie die an sie gerichteten Forderungen, z.B. bezüglich der hohen Kochfestigkeit und lebensmittelrechtlichen Unbedenklichkeit, erfüllen. Auch Dispersionhaftklebstoffe, z.B. auf Basis von Polyacrylsäureester oder Vinylacetat-Copolymerisaten, gegebenenfalls unter Zusatz von geeigneten Harzen, oder Schmelzhaftklebstoffe, die neben geeigneten Harzen Äthylen-Vinylacetat-Copolymere und Styrol-Butadien-bzw. Styrol-Isopren-Blockcopolymere enthalten, sind im Prinzip geeignet, doch muß im Einzelfall geprüft werden, ob diese Haftklebstoffe die an sie gerichteten Forderungen im befriedigendem Maße erfüllen können.

Der Haftklebstoff besteht aus einem hochpolymeren Basisharz, das die Kohäsionseigenschaft und die spezifische Haftung bestimmt, und gewöhnlich einem klebrigmachenden Harz, das auch durch niedermolekulare Anteile des Basispolymeren ersetzt sein kann. Ein solches Harz wird überwiegend in gelöster Form zum Basisharz gegeben. Verwendung können z.B. finden: Naturharze, wie Balsamharze, modifizierte Naturharze, z.B. auf Basis von Hydroabietylphthalat oder Estern des Kolophoniums, Polyterpen-, Terpenphenol-, Cumaron- Inden-, Keton- und Kohlenwasserstoffharze. Durch den Zusatz von klebrigmachenden Harzen wird zwar die Oberflächenklebrigkeit und Schälfestigkeit erhöht, doch kann hierbei gegebenenfalls eine Verminderung der Kohäsion eintreten. Zur Erhöhung der Kohäsion sowie der Wärmestandfestigkeit und Scherfestigkeit der Verklebung ist es z.B. möglich, das Basisharz nach dem Auftrag auf den verbindenden Folienstreifen oder auf die Überlappungsfläche zu vernetzen, z.B. mit chemischen Zusätzen bei Raumtemperatur oder thermisch durch 5 bis 15 minütiges Erwärmen auf 130 bis 140°C, wobei auch eine wesentlich verbesserte Heißwasserbeständigkeit der Klebenaht erzielt werden kann. Hierzu ist es erforderlich, dem Klebstoff Vernetzungsmittel zuzusetzen, die mit reaktionsfähigen Gruppen des Polymeren unter Vernetzung reagieren, oder man verwendet als Basisharz ein Homo- oder Copolymerisat, in dem reaktive, d.h. vernetzbare Comonomere mit funktionellen Gruppen, z.B. Carboxyl-, Amid-, Amino-, Methylol- oder Hydroxylgruppen, einpolymerisiert sein können, die die Hafteigenschaften verbessern und/oder eine begrenzte Vernetzung des Klebstoffilms ermöglichen. Im allgemeinen sind diese Komponenten mit funktionellen Gruppen zwar von Vorteil, denn sie steigern die Kohäsion des Haftkleberfilms, doch sind sie nicht unbedingt erforderlich. Als Beispiele für solche Copolymerisate sind zu nennen: anionenaktive Copolymerisate aus Acrylsäureestern, Vinylacetat, ungesättigter Carbonsäure, wie Acrylsäure, Methacrylsäure, Itaconsäure, und einer Glycidylverbindung, wie Glycidylacrylat oder Glycidylmethacrylat, Copolymerisate mit bifunktionellen Monomeren wie Triäthylenglykoldimethacrylat oder -diacrylat, Tetramethylenglykoldiacrylat, oder -dimethacrylat, Copolymerisate von Acrylsäureestern, 1-Halogencarbonsäurevinylester, wie z.B. Chloressigsäurevinylester, 1,2-ungesättigten Carbonsäuren, wie Acrylsäure, oder ungesättigten Dicarbonsäuren, und als 4. Komponente eine Hydroxylgruppen enthaltende polymerisierbare Einheit, Copolymerisate von N-Methylolacrylsäureamid (oder N-Methylolmethacrylsäureamid) mit Acrylsäureestern (bzw. Methacrylsäureestern), die noch freie, nicht veresterte Carboxylgruppen aufweisen, wobei dieses Copolymerisat thermisch unter Wasserabspaltung vernetzt wird. Ferner dient als reaktives Comonomeres auch N-(1,1,-Dimethyl-3-oxo)butyl-acrylamid

$CH_2{=}CH{-}CO{-}NH{-}C(CH_3)_2{-}CH_2{-}CO{-}CH_3$

Die Doppelbindung gestattet die Copolymerisation, während die Keto-Gruppe und die H-Atome in $\alpha$-Stellung zur Keto-Gruppe die Vernetzungsreaktion ermöglichen. Die Vernetzung kann durch Erhitzen mit Peroxiden eingeleitet werden. Ein geeigneter vernetzbarer Haftkleber enthält beispielsweise ein Copolymerisat auf Basis von Acrylsäureestern unter Mitverwendung von Acrylnitril und carboxylgruppenhaltigen Monomeren, die bei Zugabe von Laugen oder Salzen ein- oder mehrwertiger Metalle, wie z.B. Ammoniak, Alkalilauge oder Aluminiumsalz, bereits kalt, d.h. bei Raumtemperatur, vernetzt werden. Als weitere Comonomere sind Acrylsäurehydrazide und Acrylathydrazone in Acrylsäureester enthaltenden Copolymerisaten zu nennen.

Für die Schlauchhülle aus Cellulosehydrat werden besonders vorteilhaft Polyacrylsäureester als Haftklebstoffe verwendet, wobei die Säuregruppen mit einem oder mit verschiedenen aliphatischen Alkoholen, d.h. einem $C_1$—$C_{12}$-Alkohol, insbesondere aber einem $C_4$—$C_8$-Alkohol, wie z.B. Butylalkohol oder 2-Äthylhexanol, verestert sind.

Die Klebstoffschicht kann noch weitere nichtklebende Zusätze enthalten, wie sie bei Klebstoffen an sich üblich sind, z.B. hochviskose Verdickungsmittel auf Basis von Homo- oder Copolymerisaten von polyacrylsauren Salzen oder Polyvinylpyrrolidon, Konservierungsmittel, um die Klebstoffschicht vor dem Befall durch Mikroorganismen zu schützen, Netzmittel, Weichmacher z.B. auf Basis von Phthalsäureestern mit geradkettigen (Butanol) oder verzweigten (2-Äthylhexanol) Alkoholen, Füllstoffe wie Kaolin, Glaskugeln, Kreide, Quarzmehl, Mikrodolomit, Schwerspat, feinkörnigen Sand, Zinkoxid und Pigmente sowie organische und anorganische Farbstoffe in Pulver- oder Schuppenform.

Die Breite des Klebstoffilms in der Überlappungsnaht wird je nach gewünschten Festigkeitswerten und Kalibern zwischen etwa 3 bis 70 mm gewählt und beträgt vorteilhafterweise 5 bis 15% des späteren Hüllenumfanges. Bei Verwendung eines klebenden Folienstreifens zur überlappenden Verbindung einer aus den Randzonen gebildeten Stoßnaht sind entsprechend doppelt so breite Klebstoffilme erforderlich. Wegen des geringeren Materialbedarfs und der besseren Schmiegsamkeit der Schlauchhülle, eine Eigenschaft, die besonders für das Raffen von Wursthüllen von großer Bedeutung ist, sowie wegen der einfacheren Herstellungsweise ist die überlappende Verklebung der längsaxial verlaufenden Kanten einer Bahn gegenüber der Verklebung einer Stoßnaht mit einem Klebeband vorzuziehen. Die Dicke des Klebstoffilms ist etwa 20 bis 150 $\mu$m, vorzugsweise etwa 40 bis 50 $\mu$m.

Mit Haftklebstoffen hergestellte Bindungen lassen sich bekanntlich mehrmals lösen und wieder zusammenfügen. Es ist deshalb völlig überraschend, daß gerade diese Klebstoffe in Kombination mit einem der oben genannten haftvermittelnden Harze als Grundierschicht beim Verkleben von Bahnen unter Ausbildung von Schlauchhüllen eine ausreichend feste Naht bilden. Besonders bei der Herstellung von Würsten, bei der die Naht beim Brühen der Wurst längere Zeit heißem Wasser von etwa 80°C ausgesetzt ist, sowie beim Füllen, Abdrehen, Abbinden, Klippen und dergleichen, wenn die Naht hoher mechanischer Belastung und Spannungen standhalten muß und Dimensionsänderungen eintreten, hat sich gezeigt, daß diese Kombination aus haftvermittelndem Harz und Haftklebstoff, auch wegen dessen elastischen Charakters, den früher beschreibenen Klebstoffen sogar überlegen ist. So zeigen die Haftklebstoffe aufgrund ihrer Dauerklebrigkeit den Vorteil, daß die zu verbindenden Teile auf schnelle und einfache Weise mit ausreichender Haftfestigkeit gegenüber scherender Belastung miteinander verklebt werden können. Unter scherender Belastung ist das Einwirken von tangentialen Zugkräften auf die Klebenaht senkrecht zur Längsachse der Schlauchhülle zu verstehen.

Wie sich zeigte, liegt die Reißkraft von Klebestellen mit 35 bis 45 N/15 mm Probenbreite im gleichen Bereich wie die Reißkraft des Materials der Schlauchhülle.

Es hat sich allerdings gezeigt, daß eine in üblicher Weise aufgetragene Haftkleberschicht gewöhnlich eine ausreichende Rauchdurchlässigkeit nicht gewährleistet. Mit Wurstbrät gefüllte, geklebte Schlauchhüllen, insbesondere aus Celluloseregenerat, zeigen nach dem Räuchern im Bereich der vollflächigen Verklebungsnaht keine oder nur unvollständige Räucherfarbe.

Es ist bekannt, daß die Räucherfärbung durch Reaktion von Phenolen und Carboxylverbindungen mit Proteinen zustande kommt, wobei ihre Intensität und Haltbarkeit besonders vom Wassergehalt der Hülle, vom pH-Wert des Substrats sowie von Dauer und Höhe der Erhitzung abhängen. Die Hauptbestandteil im Rauch darstellenden flüchtigen Carbonsäuren, die für die Färbung besonders maßgeblich sind, müssen deshalb den Nahtbereich der Schlauchhülle passieren können.

Die Überprüfung der Rauchdurchlässigkeit kann beispielsweise erfolgen mit einem käuflichen Camping-Räuchergerät. Als Rauchquelle dient Räuchermehl, z.B. Buchenholzmehl, das mit Spiritusflamme oder elektrischer Heizplatte von außen erhitzt wird und Glimmrauch liefert. Um das "Feuchträuchern" zu simulieren, befindet sich im Raucherzeugungsraum ein Wasservorrat zur Luftbefeuchtung. Die Raumtemperatur wird mit einem Thermometer gemessen.

Zur Verbesserung der Rauchdurchlässigkeit wird deshalb erfindungsgemäß vorgeschlagen, die Haftklebstoffschicht nicht vollflächig aufzubringen, sondern mit Unterbrechungen oder Ausnehmungen. Die Haftklebstoffschicht kann auch in Streifen oder punktförmig gerastert aufgetragen werden, z.B. mit einer profilierten Walze, die der Haftklebstoffschicht eine Struktur verleiht. Die Auftragswalze kann auch eine Textilstruktur oder eine Bürstenoberfläche aufweisen.

Besonders vorteilhaft ist der Antrag einer Haftkleberdispersion, z.B. in einer regelmäßigen Punkt-oder Linienrasterstruktur, im Rotationssiebdruck oder Tiefdruck, der mit einer Geschwindigkeit bis zu etwa 100 m/Min. durchgeführt werden kann. Die Schichtdicke des Haftklebers von 25 bis 30 μm bei einer Flächenabdeckung von 40 bis 60% ergibt eine ausgezeichnete Rauchdurchlässigkeit bei ausreichender Festigkeit der Verbindungsnaht. Der gleiche Erfolg wird erreicht durch Öffnungen, Poren oder Perforationen der Haftkleberschicht und gegebenenfalls auch der Randbereiche der Bahn, wobei der Durchmesser dieser Durchlässe auch im Mikro- oder Nanometerbereich liegen kann. Diese Öffnungen, Poren oder Perforationen können mechanisch erzeugt werden, z.B. durch Stanzen, Prägen, Lochen oder Nadeln, wobei der Durchmesser etwa 0,7—1,2 mm ist. Geeignete Durchlässe lassen sich auch auf chemischem Weg, z.B. durch partielles Ablösen der Haftkleberschicht, erzeugen.

Es kann ferner eine extrahierbare pulverförmige Substanz, beispielsweise ein Polymeres wie Stärke, Polystyrol oder Zucker, oder ein Salz, z.B. Natriumchlorid oder Natriumcarbonat, in den Haftklebstoff eingearbeitet werden, welche nach dem Auftragen des Haftklebestoffs auf den Folienstreifen oder auf die längsaxial sich erstreckenden Randzonen der Bahn unter Bildung von Poren herausgelöst wird. Es ist auch möglich, dem Haftklebstoff einen rauchdurchlässigen Zusatzstoff beizumischen, z.B. eine poröse Substanz oder organische Pigmente mit hoher Rauch- bzw. Gasdurchlässigkeit. Auch Fällungsreaktionen, wie sie bei der Herstellung von mikroporösen Folien und Membranen bekannt sind, können die Rauch- bzw. Gasdurchlässigkeit der Haftkleberschicht verbessern. Hierzu wird der Haftklebstoff in zwei flüchtigen, miteinander mischbaren Lösungsmitteln gemischt, das Gemisch auf einen Trägerfilm oder auf den zu verbindenden Randzonen ausgebreitet und die Lösungsmittel verflüchtigt, wobei das polymere Material unter Bildung einer porösen Struktur koaguliert. Der Haftklebstoff oder polymere Teile des Haftklebstoffs sind hierbei in dem einen Lösungsmittel schwer oder nicht löslich. Andererseits kann der Haftklebstoff auch in einem Lösungsmittel gelöst oder dispergiert werden und, z.B. nach Auftrag auf die Verbindungsflächen der Bahn, zur Koagulation mit einem flüssigen, mit dem Lösungsmittel mischbaren Fällmittel behandelt werden. Zur Verbesserung der Gas- und Rauchdurchlässigkeit können der Haftkleberschicht auch feinpulverige thermoplastische Kunststoffe zugesetzt werden, die bei erhöhter Temperatur durch Sintern eine mikroporöse Struktur in dieser Schicht bilden. Auch mit dem Zusatz von Gasen, z.B. Luft, Stickstoff, Kohlendioxid, oder fluorierten Kohlenwasserstoffen, in Form kleiner Blasen, die gegebenenfalls in der Hitze ausgedehnt werden, läßt sich die Gas- und Rauchdurchlässigkeit der Haftkleberschicht verbessern, wobei diese Schicht z.B. auf die Randzonen aufgesprüht wird. Das Gas kann auch durch Zusatz eines in der Hitze gasbildenden Mittels, z.B. Azoverbindungen oder Carbonate, erzeugt werden.

Die Haftklebstoffschicht kann auch, eventuell zusätzlich, ein textiles flächenhaftes, streifenförmiges, ketten- oder fadenförmiges Gebilde, z.B. einen adhäsiv, mechanisch oder thermisch verfestigten Faservliesstoff aus wirr oder geordnet abgelegten Spinnfasern, Filamenten oder multiplen Filamentgarnen aus nativem oder synthetischem Material, ein Gewebe, Netzwerk, Gitter oder dergleichen oder eine Schwamm- oder Schaumstofffolie, insbesondere mit offenporiger Struktur, enthalten. Wie sich überraschenderweise gezeigt hat, sind die beschriebenen Ausführungsformen der Schlauchhülle mit guter Rauchdurchlässigkeit im Verklebungsbereich ausreichend stabil und mechanisch und thermisch belastbar.

Sofern eine gasundurchlässige Schlauchhülle hergestellt werden soll, besteht das haftvermittelnde wasserunlösliche Harz aus einem Vinylidenharz, das mit einem Flächengewicht von gewöhnlich 3 bis 12 g/m$^2$ vorhanden ist. Hierzu gehören filmbildende Harze, die durch Mischpolymerisation von Monomeren erhalten werden, wobei wenigstens eine Komponente eine Vinylidengruppe enthält. Im allgemeinen können filmbildende Vinylidenharze verwendet werden, die im polymerisierten Molekül wenigstens 5 Gew.-%, vorzugsweise aber mindestens 80 Gew.-% Vinylidenchlorid enthalten. Als Comonomere seien genannt: Vinylchlorid, Vinylbromid, Vinylacetat, Vinylpropionat, Vinylchloracetat, Alkylacrylat oder Methacrylat, wie beispielsweise Methyl-, Äthyl-, Propyl-, Butyl-, Isobutyl-, Methoxyäthyl- oder Chloräthylacrylat oder -methacrylat, Methylvinylketon, Methylisopropenylketon, Acrylnitril, Methacrylnitril, Styrol, Vinylnaphthalin, Äthylvinyläther, Butylvinyläther, N-Vinylphthalimid, N-Vinylsuccinimid, N-Vinylcarbazol, Methylen-diäthylmalonat, ungesättigte organische Säuren, wie Itaconsäure oder Mischungen von diesen Verbindungen. Das Copolymerisat kann neben Vinylidenchlorid eins bis drei dieser Monomeren enthalten.

Das Vinylidenharz kann übliche Wachse, z.B. auf Basis von veresterten Montansäuren, Polyolefinwachse oder auf Basis von Oxazolin, und/oder übliche Füllstoffe, beispielsweise Kaolin, insbesondere hydrophobiertes Kaolin, Kieselsäure oder Calciumcarbonat (Kreide) mit einer bevorzugten mittleren Korngröße von 1 bis 3 μm enthalten.

Das Vinylidenharz oder eine Mischung des Vinylidenharzes wird mit oder ohne anderen Harzen und mit oder ohne Weichmacher, wie z.B. Ester der Phthalsäure wie Dibutylphthalat, Ester der Zitronensäure, wie Acetyltributylcitrat, der Sebacinsäure oder Weinsäure, wie Diisobutyltartrat, verwendet.

Das Vinylidenharz wird mit einem hierzu üblichen Verankerungsmittel, z.B. mit einem der oben genannten gehärteten, kationischen hitzehärtbaren Harze als Verankerungsmittel, oder direkt auf die Trägerbahn in Form wäßriger oder nichtwäßriger Mischungen wie Dispersionen, Emulsionen, in Form einer Latex, in Form von Lösungen in Wasser oder organischen Lösungsmitteln oder in Form von Schmelzen aufgebracht. Die Trägerbahn aus regenerierter Cellulose kann sich hierbei in getrocknetem, wieder angefeuchtetem oder noch nicht getrocknetem gelartigem Zustand befinden. Nach dem Auftragen wird das Dispergier- bzw. Lösungsmittel entfernt, z.B. durch Erhitzung mit Heißluft und/oder Infrarotheizung. Die Bahn wird gewöhnlich bis zu einem Feuchtigkeitsgehalt von weniger als 15 Gew.-%, vorzugsweise 5 bis 10 Gew.-%, getrocknet. Eine weitere Sinterung des Überzugs bei erhöhter Tempratur ist nur erforderlich, wenn eine besonders starke Haftung des Überzugs auf dem Träger gewünscht wird. Im allgemeinen ist eine Überzugsdicke im Bereich von etwa 0,05 bis 0,5 mm ausreichend.

Mit Vinylidenharzen als Verankerungsschicht ausgerüstete Schlauchhüllen sind weitgehend gasundurchlässig und eignen sich z.B. für Würste vom Leberwursttyp.

Zur Verpackung von Fleischwaren in Form von Wurstmasse werden bekanntlich geraffte, nahtlose Schlauchhüllen verwendet, die beim Einpressen der Wurstmasse fortlaufend entfältelt werden. Diese gerafften Hüllen, in der Fachsprache auch als Raupen oder Hohlstäbe bezeichnet, werden bisher aus langen, nahtlosen Schläuchen hergestellt, die man in Richtung ihrer Längsachse fördert und gegen eine Gegenkraft rafft, wobei die Länge der gerafften Hülle gewöhnlich nur noch 1 bis 3% der Ursprungslänge beträgt.

Überraschenderweise hat sich nun gezeigt, daß sich die Schlauchhülle der Erfindung — trotz der Verdickung im Bereich der Verklebung infolge der Überlappung der Ränder oder des beide Ränder überdeckenden Bandes — ausgezeichnet raffen läßt. Die in den Beispielen hergestellten Schlauchhüllen werden beispielsweise mit dem aus den US—A—3,988,804 und US—A—4,185,358 bekannten Verfahren bzw. der dort beschriebenen Vorrichtung gerafft.

Gemäß diesem Verfahren wird die zum Raffen dienende Kraft von zumindest einem um die Längsachse der Schlauchhülle rotierenden Element aufgebracht. Insbesondere befindet sich das zum Raffen dienende Element während des Raffvorgangs ständig im Krafteingriff mit der Schlauchhülle und überträgt die zur Ausbildung einer biegesteifen Raupe ausreichende Preßkraft auf die Schlauchhülle. Vorteilhafterweise wird der zu raffenden Hülle vor dem eigentlichen Raffvorgang eine Vertiefung in Form einer exakten, durchgehenden Schraubenlinie eingeprägt. Zweckmäßigerweise wird auf die zu raffende Schlauchhülle vor dem Raffvorgang außen ein Gleitmittel und/oder Befeuchtungsmittel aufgebracht. Eine geeignete Vorrichtung für dieses Verfahren besteht aus einem Rafforgan und einem Widerlager, wobei das Rafforgan aus einem die Schlauchhülle umschließenden und in Rotation um diese versetzbaren Ringteil besteht, an dem das zum Raffen dienende und mit der Schlauchhülle im Eingriff stehende Element befestigt ist.

Das zum Raffen dienende Element ist vorzugsweise als ein im zylindrischen Inneren des Ringteils schraubenförmig gewundener Vorsprung ausgebildet. Insbesondere weist das Ringteil eine schraubenförmig gewundene Innennut auf, in die ein entsprechend gewundenes Element eingeführt ist, das von der zylindrischen Innenseite der Hülse als Schraubenwindung absteht. Dieses gewundene Element besteht zweckmäßigerweise aus einem Material mit günstigen Gleiteigenschaften und ist mehrgängig ausgebildet. Das Ringteil und der schraubenförmig gewundene Vorsprung sind gewöhnlich einstückig ausgebildet. Wegen Einzelheiten dieser Vorrichtung wird auf die beiden US—PSen verwiesen. In Abweichung von dem dort beschriebenen Verfahren ist es aber bei der Schlauchhülle der Erfindung von Vorteil, eine Sicherung der Hülle gegen Verdrehen um ihre Achse nicht vorzusehen bzw. ein kontinuierliches Verdrehen der Hülle um ihre Achse zu steuern. Das geschieht bespielsweise dadurch, daß man einen Raffdorn einsetzt, der gegenüber dem üblichen verkleinert ist, so daß die durch den Klebestreifen bzw. durch die Überlappung relativ dicke Nahtzone spiralig um die Längsachse der gerafften Schlauchhülle angeordnet wird, wobei man ein Raffverhältnis von 1:70 bis 1:80 erreichen kann.

Die gerafften Schläuche werden mit einem Wurstbrät vom Brühwursttyp gefüllt (ca. 20 m/min.), mechanisch abgedreht, bei 70 bis 80°C gebrüht, geräuchert und mit Wasser abgekühlt.

Man erhält Würste mit gleichmäßiger Form und schälbarer, an der Wurstmasse eng anliegender Hülle.

Sofern die Schlauchhülle z.B. für empfindliche Nahrungsmittel vorgesehen ist, so wird die Bahn oder die Schlauchhülle sterilisiert, wobei man übliche Methoden, wie z.B. Hitze- oder Ozonbehandlung oder Hochfrequenzbestrahlung, anwendet.

Die Schlauchhüllen der Erfindung lassen sich mit höherer Geschwindigkeit als bisher produzieren: Bei der Herstellung von Bahnen aus regenerierter Cellulose nach dem Viskoseverfahren kann der Spinnprozeß rascher durchgeführt werden, ebenso das Beschichten der Bahnen mit dem wasserunlöslichen Harz und das Bedrucken. Neben Flexodruck ist auch hochwertiger Tiefdruck möglich. Ferner läßt sich der Zuschnitt bzw. die Bahn mit einem Rundumdruck oder als Vorder- und Rückseitendruck bedrucken. Bei der Verwendung als Wursthülle tritt keine Geschmacksbeeinflußung der Wurstmasse ein. Die Wursthülle zeigt große Festigkeit gegenüber Dehnungsbelastung und Volumenbeständigkeit beim Füllen mit Wurstmasse, Hantieren und Verarbeiten. Sie ist auch bei tiefen Temperaturen lagerfähig und läßt sich gut aufschneiden.

## Beispiel 1

Eine Bahn aus regenerierter Cellulose, hergestellt nach dem Viskoseverfahren, mit einer Dicke von 38 $\mu$m, einem Flächengewicht von 55 g/m², einem Wassergehalt von 7%, einem Quellwert von 165%, und einer Wasserdampfdurchlässigkeit von 700 g/m².24h, wird auf einer üblichen Beschichtungsanlage mit Walzenantragswerken und Trocknungsstationen auf einer Oberfläche mit einer 1%igen wäßrigen Lösung eines Modifizierten Melamin-Formaldehyd-Harzes (®Accobond der Fa. ACC) beschichtet.

Nach Trocknung der Bahn bei etwa 125°C im Luftstrom verbleibt eine Harzschicht mit einem Flächengewicht von 47 mg/m². Die Wasserdampfdurchlässigkeit der beschichteten Bahn ist 710 g/m².24h und damit nahezu unverändert.

Die Wasserdampfdurchlässigkeit wird in allen Beispielen nach DIN 53 122 gravimetrisch bestimmt, wobei im Verdampfungsraum ein Konstantklima feucht-warm (DIN 50 015, 40°C, 92% r.F.) vorhanden ist. Als Prüfgerät dient ein Klimaprüfschrank vom Typ der Fa. Karl Weiss, Gießen, Deutschland.

Auch die maximale Aufnahme von flüssigem Wasser bei Raumtemperatur nach 24h (Quellwert), gravimetrisch bestimmt, bleibt mit 162% nahezu unverändert.

Die Dimensionsänderungen, d.h. die Änderung der Fläche (A) und der Dicke (B), bei der Wasseraufnahme (=Quellvermögen) durch Lagerung in flüssigem Wasser von 75°C über 10 Minuten und der nachfolgenden Wasserabgabe durch Lagerung in Normalklima (DIN 50 014, 23°C, 50% r.F.) werden durch die Beschichtung mit dem haftvermittelnden Harz im wesentlichen nicht geändert:

Änderung der Fläche (A) und Dicke (B) der Cellulosebahn

| | (A) | (B) |
|---|---|---|
| bei Wasseraufnahme vor der Beschichtung | +3% | +128% |
| nach der Beschichtung | +4% | +132% |
| bei Wasserabgabe vor der Beschichtung | −20% | +10% |
| nach der Beschichtung | −16% | +12% |

Die beschichtete Bahn mit einer Breite von 75,5 mm wird unter Verwendung von Formschablonen zu einem Schlauch gebogen, der durch ein den Schlauch umgebendes Rohr abgestützt wird. Die längsaxial sich erstreckenden Ränder der Bahn berühren sich mit ihren Kanten. Die mit Harz beschichtete Oberfläche befindet sich auf der Außenseite des Schlauches. Ein 12 mm breites, einen Haftkleber aufweisendes Klebeband, bestehend aus einer 12 μm dicken streckorientierten Polyäthylenterephthalatfolie und einer Haftklebstoffschicht auf Basis eines carboxylgruppenhaltigen Acrylsäureestercopolymerisats unter Mitverwendung von Acrylnitril (®Acronal 85D der Fa. BASF), wird auf die durch den Kantenstoß gebildete Naht aufgelegt, wobei die beiden Randzonen symmetrisch überdeckt werden. Die wäßrige Dispersion des Haftklebstoffs zeigt eine Viskosität bei 25°C von 70 bis 150 mPa.s (Contraves-Rheometer STV, B III) und einen pH-Wert (DIN 53 785) von 2 bis 3. Durch Andrücken, z.B. mit einer Walze, werden die aneinanderstoßenden Ränder mit dem Klebeband unter Ausbildung einer wasserdichten Naht verbunden.

Die Reißfestigkeit der Naht wird gemessen nach DIN 53 455 an einer in Normalklima (DIN 50 014, 23°C, 50% r.F.) konditionierten Probe. Die Reißkraft beträgt 43 N/15 mm, die Reißdehnung (DIN 53 455) ist 35%.

Die Untersuchung der Festigkeit der Probe in nassen Zustand wird gemessen nach einer Lagerzeit von 30 min. in 80°C heißem Wasser. Die Reißkraft beträgt 7 N/15 mm, die Reißdehnung 55%. In Abwandlung des Beispiels 1 kann auch ein Klebeband mit einer Trägerfolie aus Cellulosehydrat (®Tesafilm 101 der Fa. Beiersdorf) verwendet werden, wobei die mechanischen Eigenschaften der Schlauchhülle im wesentlichen gleich sind.

Beispiel 2

Eine Bahn aus regenierter Cellulose, hergestellt nach dem Viskoseverfahren, mit einer Dicke von 34 μm, einem Wassergehalt von 7% und einer Breite von 81,5 mm wird mit dem hitzehärtbaren Harz des Beispiels 1 beidseitig beschichtet, Flächengewicht 48 mg/m² je Oberfläche, und getrocknet.

Auf derartig beschichteten Bahnen wird jeweils entlang einem der beiden längsaxial verlaufenden Ränder eine jeweils einen verschiedenen Haftklebstoff enthaltende Schicht einer Breite von etwa 6 mm aufgebracht.

Der Klebstoffantrag ist im ersten Fall eine vorvernetzte, unter Wärmeeinwirkung schnell vernetzende, etwa 30%ige weichmacherfreie Lösung eines carboxylgruppenhaltigen Acrylsäureestercopolymerisats in Benzin mit einem Siedebereich von etwa 65 bis 95°C (®Acronal DS 3110 der Fa. BASF). Die Viskosität der Lösung bei 25°C ist 0,8 bis 2,5 mPa.s (Epprecht-Viskosimeter, STV, C III). Im zweiten Fall ist der Haftklebstoff eine wäßrige weichmacherfreie, anionaktive Dispersion eines Polymeren auf Basis eines Acrylsäurebutylesters (®Acronal 4D der Fa. BASF). Der Feststoffgehalt (DIN 53 189) ist etwa 50%, die Viskosität der Dispersion bei 25°C (Epprecht-Viskosimeter, STV, A III) ist etwa 15 bis 38 mPa.s. Im dritten Fall ist der Haftklebstoff eine wäßrige, feinteilige, weichmacherfreie, anionenaktive Dispersion eines bei Zugabe von Alkali kalt vernetzbaren, carboxylgruppenhaltigen Copolymer auf der Basis von Acrylsäureestern unter Mitverwendung on Acrylnitril, Feststoffgehalt (DIN 53 189) etwa 50%, Viskosität bei 25°C (Contraves Rheometer, STV, B III) 100—220 mPa.s, pH-Wert 4,5 bis 5,5 (®Acronal 80D der Fa. BASF). Der zuletzt genannte Haftklebstoff wird nach dem Auftrag auf

die Bahn mit wäßriger Alkalilösung nachvernetzt. Das Lösungsmittel bzw. Wasser wird in allen Fällen durch Wärmeeinwirkung entfernt.

Jede Bahn wird dann zu einem Schlauch geformt, wobei die klebstoffreie Randzone die Klebstoff aufweisende Randzone überlappend überdeckt. Auf diese Weise werden die Randzonen unter Ausbildung einer längsaxial sich erstreckenden Naht miteinander verklebt.

Nach dem Verkleben läßt man auf die erste Schlauchhülle Wärme einwirken, z.B. durch Kochen in heißem Wasser, wobei eine Nachvernetzung eintritt.

Die mechanischen Eigenschaften der klimatisierten Proben (Normalklima 23°C, 50% r.F.) im trockenen Zustand einerseits und der nach 30 minütiger Lagerung in 80°C heißem Wasser naß geprüften Proben (naß) andererseits ergeben sich wie folgt:

| | | ®Acronal DS 3110 | ®Acronal 4D | ®Acronal 80D |
|---|---|---|---|---|
| Reißkraft (N/15 mm) | trocken | 35 | 38 | 39 |
| Reißdehnung (%) | trocken | 68 | 75 | 80 |
| Reißkraft (N/15 mm) | naß | 6,5 | 7,0 | 7,6 |
| Reißdehnung (%) | naß | 58 | 71 | 79 |

Beispiel 3

Eine 82 mm breite Bahn aus regenerierter Cellulose, hergestellt nach dem Viskoseverfahren, mit einer Dicke von 40 $\mu$m und einem Flächengewicht von 58 g/m² wird analog Beispiel 2 mit einem hitzehärtbaren Harz zweiseitig beschichtet und getrocknet. Das Harz ist ein Reaktionsprodukt von aliphatischen 2,6-Polyamid, Äthylentriamin und Epichlorhydrin (®Resamin VHW 61/1 der Fa. Cassella). Auf einer ihrer beiden längsaxial sich erstreckenden Randzonen wird ein längsaxial sich erstreckendes, beidseitig eine Haftkleberschicht auf Polyacrylatbasis aufweisendes Band einer Breite von etwa 6 mm (®Scotch tape 927 der Fa. 3M) ganzflächig aufgeklebt, während die der Randzone abgewendete zweite Klebstoffoberfläche des Bandes mit einer silikonisierten Papierschicht abgedeckt ist. Jede Klebstoffschicht ist etwa 50 $\mu$m dick und 6 mm breit. Die mit dem Doppelklebeband belegte. Randzone und das Doppelklebeband werden durch Nadeln perforiert, wobei Löcher mit einem Durchmesser von etwa 0,9 mm und einem Mittenabstand von etwa 2 mm entstehen. Nach Abziehen der Papierschicht von der zweiten Klebstoffschicht wird die klebstoffreie längsaxial sich erstreckende Randzone überlappend auf die andere Randzone aufgelegt und mit der zweiten Klebstoffschicht unter Bildung eines Schlauchs verklebt.

Die Schlauchhülle zeigt nach üblichem Füllen mit Wurstbrät und einer Räucherung von 30 Minuten bei 65°C auch im Bereich der Verklebungszone eine gleichmäßige, typisch rötlich-braune Räucherfarbe, was auf eine gute Rauchdurchlässigkeit auch in diesem Bereich zurückzuführen ist.

Beispiel 4

Die mit hitzehärtbarem Harz vorbehandelte Bahn des Beispiels 3 wird mit der Haftklebstofflösung des Beispiels 2 entlang einer der beiden längsaxial sich erstreckenden Ränder in einer Breite von etwa 7 mm mit einer Tiefdruckwalze und einem Rakel beschichtet. Die Tiefdruckwalze hat eine Gravur von 20 Näpfchen pro cm. Nach dem Verdampfen des Lösungsmittels zeigt die Randzone der Bahn ein rautenförmiges Muster eines punktförmigen Klebestoffauftrags. Die Klebstoffpunkte haben einen Durchmesser von etwa 0,5 bis 0,6 mm, eine Höhe von 20 $\mu$m und bedecken etwa 40% der Fläche eines 7 mm breiten längsaxial sich erstreckenden Streifens.

Die beiden längsaxial sich erstreckenden Randzonen werden überlappend miteinander unter Bildung eines Schlauches verklebt. Die Schlauchhülle zeigt nach üblichem Füllen mit Wurstbrät und einer Räucherung von 30 Minuten bei 65°C auch im Bereich der Verklebungszone eine gleichmäßige, typisch rötlich-braune Räucherfarbe, ohne daß ein dem Klebstoffauftrag entsprechendes, rautenförmiges Muster von blaßem, ungerüuchertem Wurstbrät zu erkennen ist. Ansonsten hat sie die gleichen Eigenschaften wie die im Beispiel 2 hergestellte Schlauchhülle.

Beispiel 5

Analog zu Beispiel 4 wird eine hochprozentige, wäßrige, weichmacherfreie, anionenaktive Dispersion eines Haftklebstoffs auf Basis eines carboxylgruppenhaltigen Acrylsäureestercopolymerisats mit einem Feststoffgehalt (DIN 53 189) von etwa 70%, einer Viskosität bei 25°C (Contraves-Rheometer STV, C III) von 800 bis 2500 mPa.s und einem pH-Wert (DIN 53 785) von 3,5 bis 4,5 (®Acronal DS 3163 der Fa. BASF) mittels Siebdruck unter Verwendung einer 40 mesh-Lochschablone und einem

Streichrakel in einer Breite von 5 mm auf eine der beiden längsaxial sich ertreckenden Randzonen der Bahn gedruckt und getrocknet. Man erhält einen regelmäßigen punktförmigen Kleberauftrag, wobei die Einzelpunkte einen Durchmesser von ca. 0,45 mm und eine Höhe von 25 bis 30 $\mu$m besitzen und etwa 50% der Fläche eines etwa 5 mm breiten längsaxial sich erstreckenden Streifens bedecken. Analog zu Beispiel 4 wird der Schlauch gebildet. Die Verklebungsstelle ist auch bei dieser Schlauchhülle ausreichend rauchdurchlässig.

Beispiel 6

Die in Beispiel 5 verwendete Dispersion des Haftklebstoffs wird mit Wasser im Volumenverhältnis von etwa 1:1 verdünnt und mit einer Luftdruck-Sprühdüse, Düsendurchmesser 0,5 mm, Druck 0,5 bar, auf ein silikonisiertes Papier aufgesprüht und getrocknet. Die erhaltene Haftklebstoffchicht zeigt offenporige Struktur mit durchgehenden Öffnungen mit einem Durchmesser im Bereich von etwa 100 bis 400 $\mu$m.

Das beschichtete Papier wird in 6 mm bereite Streifen geschnitten und in längsaxialer Richtung auf eine der beiden längsaxialen Randzonen einer Bahn aus regenerierter Cellulose vollflächig aufgeklebt, deren beide Oberflächen mit einem hitzegehärteten kationischen hitzehärtbaren Harz beschichtet sind.

Nach Schlauchformung über eine Formschulter überlappen sich die Randzonen der Bahn um ca. 7 mm. Gleichzeitig oder danach wird das Schutzpapier abgezogen und unmittelbar anschließend die nunmehr freie zweite Klebstofffläche mit der zweiten Randzone der Cellulosebahn durch Andrücken, z.B. mit einer Walze verbunden. Die erhaltene Schlauchhülle zeigt eine gute Wasserdampf- und Rauchdurchlässigkeit und ausgezeichnete mechanische Eigenschaften.

Beispiel 7

In die Haftklebstoff-Lösung des Beispiels 2 wird kristallisiertes Kochsalz der Körnung von 0,02 bis 0,2 mm bis zu einer Konzentration von etwa 30 Gew.-% eingerührt. Die heterogene Mischung wird mit einer Streichvorrichtung in 6 mm Breite auf eine der beiden längsaxial sich erstreckenden Randzonen einer Celluloseregenratbahn aufgetragen und durch Erhitzen vom Lösungsmittel befreit. Durch Behandeln der beschichteten Bahn mit Wasser wird das Salz extrahiert. Danach wird getrocknet.

Man erhält eine Klebstoffschicht, die eine poröse Struktur aufweist. Nach der im Beispiel 2 beschriebenen Überlappung und Verklebung der Randzonen erhält man eine Schlauchhülle mit guter Rauchdurchlässigkeit im Verklebungsbereich.

Die in den Beispielen erhaltenen Schläuche werden mit Wasser gefüllt und bleiben nach mehrtägiger Lagerung an der Luft bei Raumtemperatur und nach mehrstündigem Hängen in heißem Wasser von 80°C im Bereich der Klebenaht völlig dicht. Sie überstanden ferner einen Innendruck von 1 bar, der mit Wasser oder Druckluft erzeugt wird.

Die Figuren 1, 2 und 3 zeigen Ausführungsformen der Verklebungsbereiche der Schlauchhülle queraxial im Schnitt, die Figuren 4 und 5 zeigen rauchdurchlässige Ausführungsformen der Schlauchhülle, wobei auch hier nur der Überlappungsbereich gezeigt wird, die Figuren 6 mit der Fig. 6a, 7 und 8 zeigen drei Ausführungen des Verfahrens.

In Fig. 1 sind die zu den längsaxial sich erstreckenden Rändern 1 und 2 nahe Bereiche des Zuschnitts bzw. der Bahn 4 überlappend miteinander verklebt, wobei die Haftklebstoff enthaltende Schicht 3 sich zwischen den überlappenden Bereichen befindet. Mit 5a und 5b sind die haftvermittelnden Harzschichten auf den Oberflächen des Zuschnitts bzw. der Bahn bezeichnet.

In Fig. 2 und 3 stoßen die Ränder 1 und 2 des Zuschnitts bzw. der Bahn 4 aneinander und sind mit einem beide Ränder überdeckenden Filmstreifen 6 über eine Haftklebstoff enthaltende Schicht 3 und eine haftvermittelnde Harzschicht 5 verbunden. Ein Filmstreifen kann sich auch auf der Außenseite und ein zweiter auf der Innenseite der Schlauchhülle befinden.

In Fig. 4 ist der Verklebungsbereich einer analog zu Fig. 1 verklebten Schlauchhülle dargestellt, wobei auch die Bezugsziffern die gleiche Bedeutung haben. Mit 7 sind Durchlässe in der Klebstoffschicht 3 bezeichnet, die sich zwischen dem punktförmig strukturierten Klebstoffauftrag befinden.

Die Fig. 5 zeigt eine weitere Ausbildung des in Fig. 4 dargestellten Verklebungsbereiches. Mit 8 sind Perforationen im Bereich der Ränder 1 und 2 bezeichnet, die sich durch die ganze Naht einschließlich der Bahn 4 und der Klebstoffschicht 3 erstrecken.

Die in den Figuren gezeigten Schichten sind aus Gründen der besseren Übersichtlichkeit nicht maßstabsgetreu widergegeben.

Aus der Fig. 6 ist der Verfahrensablauf der Schlauchformung und Verklebung der Randbereiche ersichtlich. Die von einer Wickelrolle 9 abgezogene Bahn 10 und das von einer Wickelrolle 11 abgezogene und im Randbereich der Bahn 10 mit der Bahn verklebte Klebeband 12 durchlaufen eine Formschablone 13, im Schnitt in Fig. 6a gezeigt, und eine Überlappungshilfe 14. Danach wird der Papierträger 15 vom Klebeband 12 abgezogen und der innere Randbereich der jetzt schlauchförmigen Bahn 10 mit der nun freien Oberfläche der Haftklebstoffschicht verklebt, wobei die Bahn 10 das schematisch dargestellte Stützrohr 16 mit Anlegehülse 17 durchläuft.

In Fig. 7 erfolgt die Schlauchbildung mit einer Formschulter. Die Bahn 10 wird analog zu dem in Fig. 6 gezeigten Verfahren mit einem Klebeband 12 im Randbereich verklebt, über Walzen 18 geführt

und an der Formschulter 19 zu einem Schlauch geformt. Nach Abzug des Papierträgers 15 wird die freie Oberfläche der Haftklebstoffschicht mit dem inneren Randbereich der Bahn verklebt.

Die Fig. 8 zeigt eine Weiterbildung des Verfahrens, wobei der direkte Klebestoffauftrag an der Flachbahn gezeigt wird.

Von der Vorratsrolle 9 wird eine Bahn 10 aus Celluloseregenerat in ein Tief-druckauftragswerk geführt, das aus einer gerasterten Auftragswalze 20, einem Rakel 22 und einer Gegenwalze 21 besteht. Die Klebstofflösung oder -dispersion wird vom Vorratsbehälter 23 in die Wanne 24 gefördert. Im Trockenkanal 25 wird der streifenförmige Klebstoffauftrag getrocknet. Die Bahn 10 wird mittels Formschablone 13, Stützrohr 16 und Anlegehülse 17 zu einem Schlauch mit überlappter Längsnaht geformt, mit dem Abzugsrollenpaar 26 flachgelegt und zu der Aufwickelvorrichtung 27 transportiert.

**Patentansprüche**

1. Aus blatt- oder bahnförmigem, rechteckigem Folienzuschnitt oder endloser Folienbahn (4), der bzw. die um die Längschse gebogen ist und dessen bzw. deren längsaxial sich erstreckenden Randbereiche (1, 2) mit einer Klebenaht verbunden sind, bestehende Schlauchhülle für Lebensmittel, insbesondere Wurstwaren, wobei die Schlauchhülle zumindest im Bereich der Klebenaht eine Schich (5a, 5b) aufweist, die ein im wesentlichen wasserunlösliches haftvermittelndes Harz enthält, dadurch gekennzeichnet, daß die längsaxial sich erstreckenden Ränder (1, 2) durch eine einen Haftklebstoff enthaltende Schicht (3) miteinander verbunden sind.

2. Schlauchhülle nach Anspruch 1, dadurch gekennzeichnet, daß den längsaxial sich erstreckenden Rändern (1, 2) nahe Bereiche des Folienzuschmitts bzw. der Folienhahn (4) überlappend miteinander verklebt sind, wobei die Haftklebstoff enthaltende Schicht (3) sich zwischen den sich überlappenden Bereichen befindet.

3. Schlauchhülle nach Anspruch 1, dadurch gekennzeichnet, daß die längsaxial sich erstreckenden Ränder (1, 2) aneinander stoßen und mit längsaxial sich erstreckenden, beide Rändern nahe Bereiche überdeckenden Filmstreifen (6) auf der Außenseite und/oder Innenseite der Schlauchhülle verbunden sind, wobei die Haftklebstoff enthaltende Schicht (3) sich zwischen dem (den) Filmstreifen und den randnahen Bereichen und die haftvermittelnde Schicht (5) sich jeweils zwischen Haftklebstoff (3) und Folienbahn (4) und gegebenenfalls Filmstreifen (6) befindet.

4. Schlauchhülle nach Anspruch 3, dadurch gekennzeichnet, daß der Filmstreifen (6) und die Randzone(n) des Zuschnitts bzw. der Folienbahn (4) im überlappungsbereich des Filmstreifens (6) mit den aneinanderstoßenden Rändern (1, 2) aus rauchdurchlässigem Material besteht und/oder rauchdurchlässige Struktur, z.B. in Form von Öffnungen, Unterbrechungen, Durchlässen, Ausnehmungen, Poren und Perforationen, aufweist und daß die Haftklebstoff enthaltende Schicht (3) zur Verbesserung der Rauchdurchlässigkeit Unterbrechungen und/oder Durchlässe (7), z.B. in Form von Poren, Offnungen, Ausnehmungen oder Perforationen (8), aufweist und/oder ein flächenhaftes textiles Gebilde, einen Schwammstoff, Schaumstoff, eine mikroporöse Folie oder Membran enthält.

5. Schlauchhülle nach Anspruch 2, dadurch gekennzeichnet, daß die Haftklebstoff enthaltende Schicht (3) im Überlappungsbereich der Randbereiche, und gegebenenfalls auch der (die) Randbereich(e), zur Verbesserung der Rauchdurchlässigkeit Unterbrechungen und/oder Durchlässe (7), z.B. in Form von Poren, Öffnungen, Ausnehmungen oder Perforationen (8), aufweist.

6. Schlauchhülle nach Anspruch 2 oder 5, dadurch gekennzeichnet, daß die Haftklebstoff enthaltende flächenhafte Schicht (3) zur Verbesserung der Rauchdurchlässigkeit ein flächenhaftes textiles Gebilde, einen Schwammstoff, einen Schaumstoff, eine mikroporöse Folie oder eine Menbran enthält.

7. Schlauchhülle nach nach einem der Ansprüche 2, 5 oder 6, dadurch gekennzeichnet, daß sich zwischen den überlappenden Bereichen ein längsaxial sich erstreckender Filmstreifen (12) befindet, der auf beiden Seiten eine Klebstoffschicht aufweist, wobei zumindest eine Klebstoffschicht eine Haftklebstoff enthaltende Schicht ist.

8. Schlauchhülle nach einem der Ansprüche 1 bis 7, dadurch gekennzeichnet, daß die Schlauchhülle aus regenerierter Cellulose, hergestellt insbesondere nach dem Viskoseverfahren, besteht, die gegebenenfalls eine Faserverstärkung enthält.

9. Schlauchhülle nach einem der Ansprüche 1 bis 8, dadurch gekennzeichnet, daß das wasserunlösliche haftvermittelnde Harz auf der Bahnoberfläche und gegebenenfalls auf der ((den) Oberfläche(n) des Filmstreifens ein gehärtetes kationisches, hitzehärtbares Harz, insbesondere ein Harnstoff-, Aldehyd-, Melamin-Aldehyd-, Phenol-Aldehyd-Harz oder ein Kondensationsprodukt von Polyamidpolyamin, alkphatischem Polyamin oder Polyamid mit bifunktionellen Halohydrinen oder deren Derivaten wie Epichlorhydrin, enthält oder ist.

10. Schlauchhülle nach einem der Ansprüche 2 bis 8, dadurch gekennzeichnet, daß das wasserunlösliche haftvermittelnde Harz ein Vinyliden-Gruppen enthaltendes Polymeres enthält oder ist, das gegebenenfalls mit einem, z.B. gehärteten kationischen hitzehärtbaren, Harz verankert ist.

11. Schlauchhülle nach einem der Ansprüche 1 bis 10, dadurch gekennzeichnet, daß der Haftklebstoff als Basisharz einen Polyacrylsäureester oder Polymethacrylsäureester enthält.

12. Schlauchhülle nach Anspruch 11, dadurch gekennzeichnet, daß der Haftklebstoff thermisch

und/oder chemisch vernetzbare Harze, vorzugsweise ein Copolymerisat mit reaktiven Comonomeren, insbesondere ein Harz auf Basis eines carboxylguppenhaltigen Acrylsäureestercopolymerisats enthält.

13. Schlauchhülle nach einem der Ansprüche 11 oder 12, dadurch gekennzeichnet, daß der Haftklebstoff ein Harz auf Basis eines Homo- oder Copolymerisats mit Acrylsäureester- und Acrylnitril-Einheiten, insbesondere von Acrylsäurebutylester und/oder Acrylsäure-2-äthylhexylester enthält.

14. Schlauchhülle nach einem der Ansprüche 1 bis 13, dadurch gekennzeichnet, daß sie gerafft ist, wobei der Verklebungsbereich spiralförmig um die Längsachse der gerafften Schlauchhülle angeordnet ist.

15. Verfharen zur Herstellung der Schlauchhülle nach einer der Ansprüche 1 bis 14, wobei man einen blatt- oder banhförmigen Zuschnitt oder eine endlose Bahn um die Längsachse biegt und zu einem Schlauch formt und die beiden längsaxial sich erstreckenden Randbereiche überlappend- oder auf Stoß angeordnet mit einem beide Randbereiche überlappenden Band- verklebt, wobei zumindest im Verklebungsbereich eine haftvermittelnde Schicht aufgetragen worden ist, dadurch gekennzeichnet, daß man vor, während oder nach der Schlauchformung auf die zu verklebenden Flächen des Zuschnitts bzw. der Bahn und/oder des Bandes eine Haftklebstoff enthaltende Lösung oder Dispersion aufbringt, das Lösungs- bzw. Dispergiermittel entfernt, und die Verklebungsnaht bildet.

16. Verfahren nach Anspruch 15, dadurch gekennzeichnet, daß das beide Randbereiche überlappende Band aufgrund seiner Struktur und/oder chemischen Zusammensetzung im wesentlichen rauchdurchlässig ist.

17. Verfahren nach Anspruch 15, dadurch gekennziechnet, daß man beide überlappenden Randbereiche der Schlauchhülle mit einem zwischen den überlappenden Randbereichen angeordneten Band verklebt, welches beidseitig eine einen Haftklebstoff enthaltende Schicht aufweist, wobei man dieses doppelseitig klebende Band zunächst mit seiner ersten Oberfläche mit einer der beiden axial sich erstreckenden Randzonen des Zuschnitts bzw. der Bahn verklebt und danach unter Bildung der Schlauchform die zweite klebende Oberfläche des Bandes mit der anderen axial sich erstreckenden Randzone des Zuschnitts bzw. der Bahn verklebt, wobei das Band vorzugsweise aufgrund seiner Struktur und/oder chemischen Zusammensetzung im wesentlichen rauchdurchlässig ist.

18. Verfahren nach einem der Ansprüche 15 bis 17, dadurch gekennzeichnet, daß man zur Verbesserung der Rauchdurchlässigkeit vor dem Bilden der Verklebungsnaht die Haftklebstoff enthaltende Schicht, die sich auf der einen längsaxial sich erstreckenden Randzone des Zuschnitts oder der Bahn oder auf dem einseitig oder doppelseitig klebenden Band befindet, gegebenenfalls auch eine oder beide Randzonen und/oder das Band, mit Durchlässen in Form von Öffnungen, Poren und/oder Perforationen versieht.

19. Verfahren nach einem der Ansprüche 15 bis 18, dadurch gekennzeichnet, daß die Durchlässe während und/oder nach dem Aufbringen der Haftklebstoff enthaltenden Schicht auf die Randzone(n) des Zuschnitts oder der Bahn oder auf das einseitig oder doppelseitig klebende Band erzeugt werden.

20. Verfahren nach einem der Ansprüche 15 bis 19, dadurch gekennzeichnet, daß man zur Verbesserung der Rauchdurchlässigkeit die Haftklebstoff enthaltende Lösung oder Dispersion mit Unterbrechungen und/oder Ausnehmungen, z.B. in Streifen-, Punkt- oder Rautenform, auf die zu verklebenden Flächen des Zuschnitts oder der Bahn und/oder Fläche des die beiden Randbereiche überlappenden Bandes oder Flächen des zwischen den überlappenden Randbereichen angeordneten Bandes, z.B. im Siebdruck- oder Tiefdruckverfahren, aufbringt.

**Revendications**

1. Enveloppe tubulaire pour denrées alimentaires, notamment pour denrées du type saucisse, constituée par un morceau de pellicule rectangulaire, en forme de fauille ou de bande, ou par une bande de pellicule sans fin (4) qui est recourbée autour de son axe longitudinal et dont les régions marginales (1, 2) qui s'étendent selon l'axe longitudinal, sont réunis par un joint collé, l'enveloppe tubulaire présentant au moins dans la région du joint collé, une couche (5*a*, 5*b*) qui contient une résine promoteur d'adhérence, pratiquement insoluble dans l'eau, caractérisée en ce que les bords (1, 2) s'étendant selon l'axe longitudinal sont réunis entre eux par une couche (3) qui contient une colle auto-adhésive.

2. Enveloppe tubulaire selon la revendication 1, caractérisée en ce que les régions du morceau de pellicule ou de la bande de pellicule (4) qui sont proches des bords (1, 2) s'étendant selon l'axe longitudinal sont collés l'une à l'autre à recouvrement, la couche (3) qui contient la colle auto-adhésive se trouvant entre les régions qui se recouvrent.

3. Enveloppe tubulaire selon la revendication 1, caractérisée en ce que les bords (1, 2) qui s'étendent selon l'axe longitudinal se touchent et sont réunis, sur la face externe et/ou sur la face interne de l'enveloppe tubulaire, à l'aide de bandelettes de film (6) s'étendant selon l'axe longitudinal, et qui recouvrent les deux régions proches des bords, la couche (3) contenant la colle auto-adhésive se trouvant entre la ou les bandelettes de film et les régions proches des bords et la couche promoteur d'adhérence (5) se trouvant entre la colle auto-adhésive (3) et la bande de pellicule (4) et éventuellement la bandelette de film (6).

4. Enveloppe tubulaire selon la revendication 3, caractérisée en ce que la bandelette de film (6)

et la ou les zones marginales du morceau ou de la bande de pellicule (4) dans la région de recouvrement de la bandelette de film (6) et des bords (1, 2) qui se touchent, sont composées d'une matière perméable à la fumée et/ou présentent une structure perméable à la fumée, par exemple sous la forme d'ouvertures, d'interruptions, de passages traversants, d'évidements, de pores et de perforations, et en ce que, pur l'amélioration de la perméabilité à la fumée, la couche (3) contenant la collei auto-adhésive présente des interruptions et/ou passages traversants (7), par exemple sous la forme de pores, ouvertures, évidements ou perforations (8) et/ou contient un élément textile de surface étendue, une matière spongieuse, une mousse, une pellicule ou membrane microporeuse.

5. Enveloppe tubulaire selon la revendication 2, caractérisée en ce que, pour améliorer la perméabilité à la fumée, la couche (3) contenant la colle auto-adhésive, dans la région de recouvrement des régions marginales et éventuellement également la ou les régions marginales, présente (nt) des interruptions et/ou passages traversants (7), par exemple sous la forme de pores, ouvertures, évidements ou perforations (8).

6. Enveloppe tubulaire selon la revendication 2 ou 5, caractérisée en ce que, pour l'amélioration de la perméabilité à la fumée, la couche (3) de surface étendue, qui contient la colle auto-adhésive, contient un élément textile de surface étendue, une matière spongieuse, une mousse, une pellicule microporeuse ou une membrane.

7. Enveloppe tubulaire selon l'une des revendications 2, 5 ou 6, caractérisée en ce que, entre les régions à recouvrement, se trouve une bandelette de film (12) s'étendant selon l'axe longitudinal, qui présente une couche de colle sur chacune de ses deux faces, au moins une couche étant une couche qui contient une colle auto-adhésive.

8. Enveloppe tubulaire selon l'une des revendications 1 à 7, caractérisée en ce que l'enveloppe tubulaire est composée de cellulose régénérée, fabriquée en particulier par le procédé viscose et qui contient éventuellement une renforcement fibreux.

9. Enveloppe tubulaire selon l'une des revendications 1 à 8, caractérisée en ce que la résine promoteur d'adhérence insoluble dans l'eau, déposée sur la surface de la bande et éventuellement sur la ou les surfaces de la bandelette de film contient ou est une résine thermodurcissable cationique durcie, en particulier, une résine urée, aldéhyde, mélamine-aldéhyde, phénol-aldéhyde, ou un produit de condensation d'une polyamide-polyamine, d'une polyamine ou d'un polyamide aliphatique avec des halohydrines bifonctionnelles ou leurs dérivés tels que l'épichlorhydrine.

10. Enveloppe tubulaire selon l'une des revendications 2 à 8, caractérisée en ce que la résine promoteur d'adhérence insoluble dans l'eau contient ou est un polymère contenant des groupes vinylidène, qui est éventuellement ancré par exemple avec une résine thermodurcissable cationique durcie.

11. Enveloppe tubulaire selon l'une des revendications 1 à 10, caractérisée en ce que la colle auto-adhésive contient, comme résine de base, un ester de l'acide polyacrylique ou un ester de l'acide polyméthacrylique.

12. Enveloppe tubulaire selon la revendication 11, caractérisée en ce que la colle auto-adhésive contient des résines réticulables par voie thermique et/ou chimique, de préférence, un copolymérisat comprenant des comonomères réactifs, en particulier une résine à base d'un copolymérisat d'ester d'acide acrylique contenant des groupes carboxyle.

13. Enveloppe tubulaire selon l'une revendications 11 ou 12, caractérisée en ce que la colle autoadhésive contient une résine à base d'un homo-ou copolymérisat comportant des unités ester d'acide acrylique et des unités acrylonitrile, en particulier, d'un ester butylique de l'acide acrylique et/ou d'un ester 2-éthylhexylique de l'acide acrylique.

14. Enveloppe tubulaire selon l'une revendications 1 à 13, caractérisée en ce qu'elle est contractée, la région de collage étant disposée en spirale autour de l'axe longitudinal de l'enveloppe tubulaire contractée.

15. Procédé de fabfrication de l'enveloppe tubulaire selon l'une des revendications 1 à 14, dans lequel on recourbe un morceau en forme de feuille ou de bande ou une bande sans fin autour de l'axe longitudinal et on le ou la met sous forme d'un tube et on colle les deux régions marginales s'étendant selon l'axe longitudinal à recouvrement ou bord à bord, à l'aide d'un ruban qui recouvre les régions marginales, une couche promoteur d'adhérence ayant été déposée au moins dans la région de collage, caractérisé en ce que avant, pendant ou après la formation du tube on dépose sur les surfaces à coller du morceau ou de la bande et/ou du ruban une solution ou dispersion contenant une colle auto-adhésive, on élimine le solvant ou dispersant et on forme le joint collé.

16. Procédé selon la revendication 15, caractérisé en ce que le ruban recouvrant les deux régions marginales est pratiquement perméable à la fumée en raison de sa structure et/ou de sa composition chimique.

17. Procédé selon la revendication 15, caractérisé en ce qu'on colle les deux régions marginales de l'enveloppe tubulaire qui sont à recouvrement au moyen d'un ruban disposé entre les régions marginales à recouvrement, et qui présente une couche contenant une colle auto-adhésive sur ses deux faces, cependant qu'on colle ce ruban adhésif à double face, tour d'abord par sa première surface à l'une des deux régions marginales du morceau ou de la bande qui s'étendent axialement et, ensuite, avec formation de la forme tubulaire, on colle la deuxième surface adhésive du ruban à l'autre zone

marginale du morceau ou de la bande s'étendant axialement, le ruban étant de préférence pratiquement perméable à la fumée en raison de sa structure et/ou de sa composition chimique.

18. Procédé selon l'une des revendications 15 à 17, caractérisé en ce que, pour améliorer la perméabilité à la fumée, avant la formation du joint collé, on munit la couche contenant la colle auto-adhésive qui se trouve sur la zone marginale s'étendant selon l'axe longitudinal, du morceau ou de la bande, ou le ruban adhésif à une face ou à double face, éventuellement également une ou chacune des deux zones marginales et/ou le ruban, de passages traversants sous la forme d'ouvertures, de pores et/ou de perforations.

19. Procédé selon l'une des revendications 15 à 18 caractérisé en ce que les passages traversants sont produits pendant et/ou après l'application de la couche contenant la colle auto-adhésive sur la ou les zones marginales du morceau ou de la bande ou sur le ruban adhésive à une face ou à double face.

20. Procédé selon l'une des revendications 15 à 19, caractérisé en ce que, pour améliorer la perméabilité à la fumée, on dépose la solution ou dispersion contenant la colle auto-adhésive, par exemple par le procédé de sérigraphie ou d'impression en héliogravure, avec des interruptions et/ou des évidements, par exemple sous la forme de bandelettes, points ou de losanges sur les surfaces à coller du morceau ou de la bande et/ou sur la surface du ruban qui recouvre les deux régions marginales, ou sur les surfaces du ruban disposé entre les régions marginales placées à recouvrement.

## Claims

1. A tubular casing for foodstuffs, in particular sausages, which comprises a sheet-like or web-like, rectangular cut piece of film or endless web of film (4) which is curved around its longitudinal axis and the edge regions (1, 2) of which running along the longitudinal axis are bonded with a glued seam, the tubular casing having, at least in the region of the glued seam, a layer (5a, 5b) which contains an essentially water-insoluble adhesion-promoting resin, wherein the edges (1, 2) running along the longitudinal axis are bonded to one another by a layer (3) containing a pressure-sensitive adhesive.

2. A tubular casing as claimed in claim 1, wherein the regions of the piece or web of film (4) which are close to the edges (1, 2) running along the longitudinal axis are glued to one another in overlapping fashion, the layer (3) containing the pressure-sensitive adhesive being between the overlapping regions.

3. A tubular casing as claimed in claim 1, wherein the edges (1, 2) running along the longitudinal axis abutt and are bonded, on the outside and/or inside of the tubular casing, by strips of film (6) which run along the longitudinal axis and cover the regions close to the two edges, the layer (3) containing the pressure-sensitive adhesive being between the strip (strips) of film and the regions close to the edges, and the adhesion-promoting layer (5) in each case being between the pressure-sensitive adhesive (3) and the web of film (4) and, if appropriate, the strip(s) of film (6).

4. A tubular casing as claimed in claim 3, wherein the strip of film (6) and the edge zone(s) of the piece or web of film (4) consist, in the overlapping region of the strip of film (6) and the abutting edges (1, 2), of material which is permeable to smoke and/or has a structure which is permeable to smoke, for example a structure in the form of openings, interruptions, passages, gaps, pores and perforations, and wherein, in order to improve the permeability to smoke, the layer (3) which contains the pressure-sensitive adhesive has interruptions and/or passages (7), for example in the form of pores, openings, gaps or perforations (8) and/or comprises a sheet-like textile structure, a sponge, a foam, a microporous film or a membrane.

5. A tubular casing as claimed in claim 2, wherein the layer (3) containing the pressure-sensitive adhesive, in the overlapping region of the edge regions, and, if appropriate, also the edge region(s), has/have interruptions and/or passages (7), for example in the form of pores, openings, gaps or perforations (8), in order to improve the permeability to smoke.

6. A tubular casing as claimed in claim 2 or 5, wherein the sheet-like layer (3) containing the pressure-sensitive adhesive comprises a sheet-like textile structure, a sponge, a foam, a microporous film or a membrane, in order to improve the permeability to smoke.

7. A tubular casing as claimed in any of claims 2, 5 or 6, wherein a strip of film (12) which runs along the longitudinal axis and has an adhesive layer on both sides is located between the overlapping regions, at least one adhesive layer being a layer containing a pressure-sensitive adhesive.

8. A tubular casing as claimed in any of claims 1 to 7, wherein the tubular casing consists of regenerated cellulose manufactured, in particular, by the viscose process and optionally containing reinforcing fibres.

9. A tubular casing as claimed in any of claims 1 to 8, wherein the water-insoluble adhesion-promoting resin on the surface of the web and, if appropriate, on the surface(s) of the strip of film contains or is a hardened cationic thermosetting resin, in particular a urea, aldehyde, melamine/aldehyde or phenol/aldehyde resin or a condensation product of a polyamide-polyamine, aliphatic polyamine or polyamide and bifunctional halohydrins or derivatives thereof, such as epichlorohydrin.

10. A tubular casing as claimed in any of claims 2 to 8, wherein the water-insoluble adhesion-promoting resin contains or is a polymer which contains vinylidene groups and, if appropriate, is anchored with, for example, a hardened cationic thermosetting resin.

11. A tubular casing as claimed in any of claims 1 to 10, wherein the pressure-sensitive adhesive contains, as the base resin, a polyacrylic acid ester or a polymethacrylic acid ester.

12. A tubular casing as claimed in claim 11, wherein the pressure-sensitive adhesive contains resins which can be crosslinked thermally and/or chemically, preferably a copolymer with reactive comonomers, and, in particular, a resin based on an acrylic acid ester copolymer containing carboxyl groups.

13. A tubular casing as claimed in any of claims 11 or 12, wherein the pressure-sensitive adhesive contains a resin based on a homo- or a copolymer with acrylic acid ester and acrylonitrile units, particularly of acrylic acid butyl ester and/or acrylic acid-2-ethyl-hexyl ester.

14. A tubular casing as claimed in any of claims 1 to 13, wherein the casing is shirred, the glueing region being arranged helically around the longitudinal axis of the shirred tubular casing.

15. A process for the manufacture of the tubular casing as claimed in any of claims 1 to 14, in which a sheet-like or web-like cut piece or continuous web is curved around its longitudinal axis and shaped to form a tube, and the two edge regions running along the longitudinal axis are glued, in overlapping fashion or by forming a butt joint with a tape overlapping the two edge regions, an adhesion-promoting layer having been applied at least in the glueing region, wherein before, during or after shaping of the tube, a solution or dispersion containing a pressure-sensitive adhesive is applied to the areas of the piece or web and/or of the tape which are to be glued, the solvent or dispersing agent is removed and the glued seam is formed.

16. A process as claimed in claim 15, wherein the tape overlapping the two edge regions is essentially permeable to smoke as a result of its structure and/or chemical composition.

17. A process as claimed in claim 15, wherein the two overlapping edge regions of the tubular casing are glued with a tape which is located between the overlapping edge regions and has, on both sides, a layer containing a pressure-sensitive adhesive, the first surface of this double-sided tacky tap initially being glued to one of the two edge zones of the piece or web which run along the axis, and the second tacky surface of the tape then being glued to the other edge zone, running along the axis, of the piece or web to form the tubular shape, and the tape being essentially permeable to smoke as a result of its structure and/or chemical composition.

18. A process as claimed in any of claims 15 to 17, wherein, in order to improve the permeability to smoke, the layer which contains pressure-sensitive adhesive and which is present on one of the edge zones of the piece or web which run along the longitudinal axis or on the tape which is tacky on one side or both sides, and if appropriate also one or both of the edge zones and/or the tape, is (are) provided with passages in the form of openings, pores and/or perforations before forming the glued seam.

19. A process as claimed in any of claims 15 to 18, wherein the passages are produced during and/or after application of the layer containing pressure-sensitive adhesive to the edge zone(s) of the piece or web or to the tape which is tacky on one side or both sides.

20. A process as claimed in any of claims 15 to 19, wherein, in order to improve the permeability to smoke, the solution or dispersion containing pressure-sensitive adhesive is applied with interruptions and/or gaps, for example in the form of strips, dots or lozenges, for example by the screen printing process or gravure printing process, to the areas, which are to be glued, of the piece or web and/or of the tape overlapping the two edge regions or of the tape located between the overlapping edge regions.

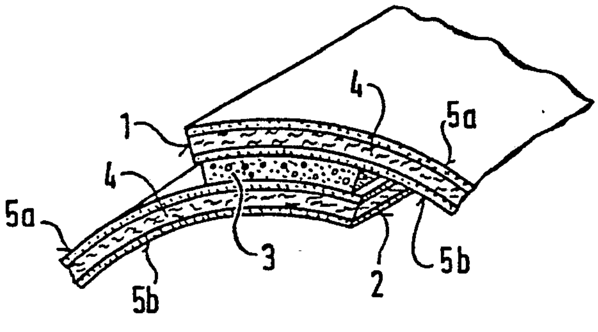


Fig. 1

Fig. 2

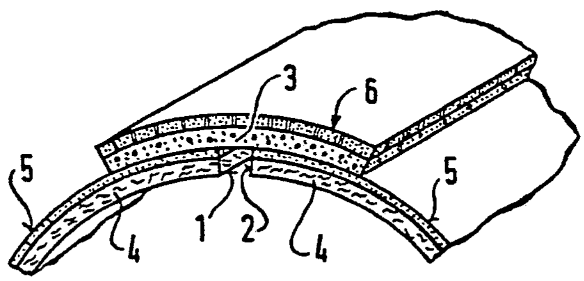


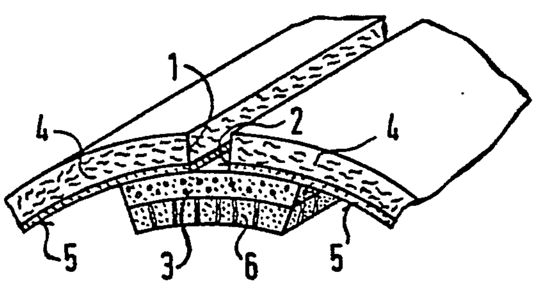


Fig. 3

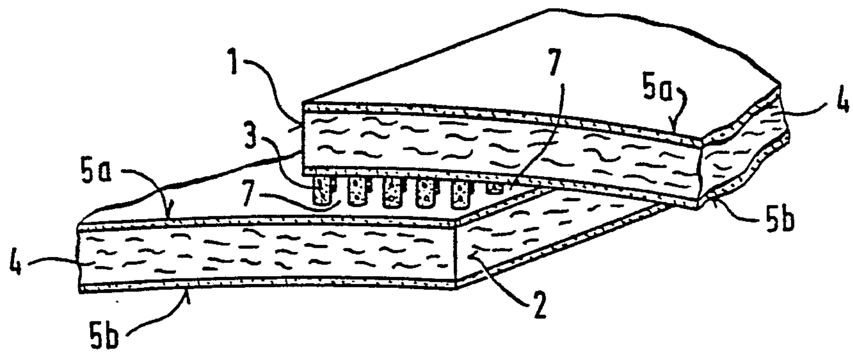


Fig. 4

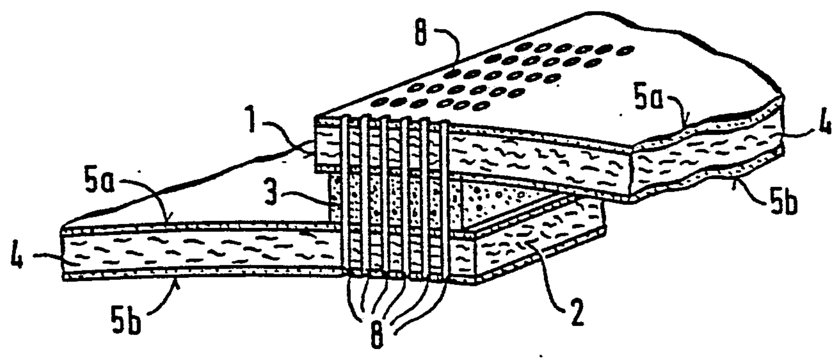


Fig. 5

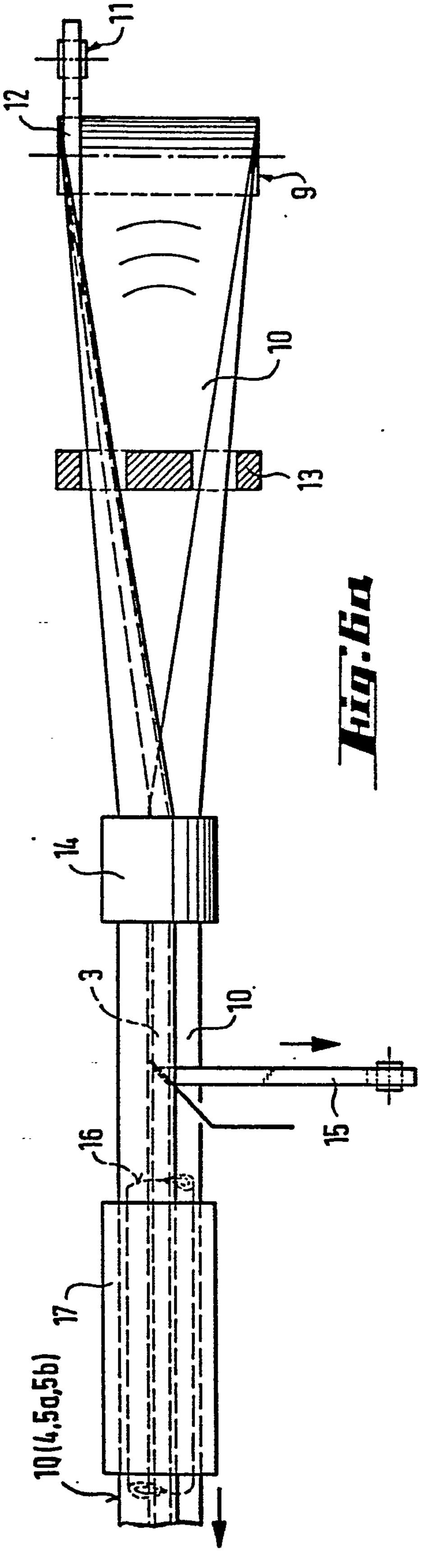


Fig. 6

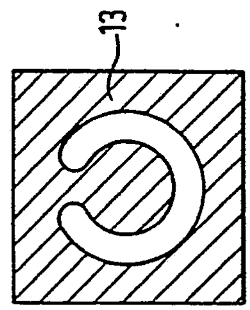


Fig. 6a

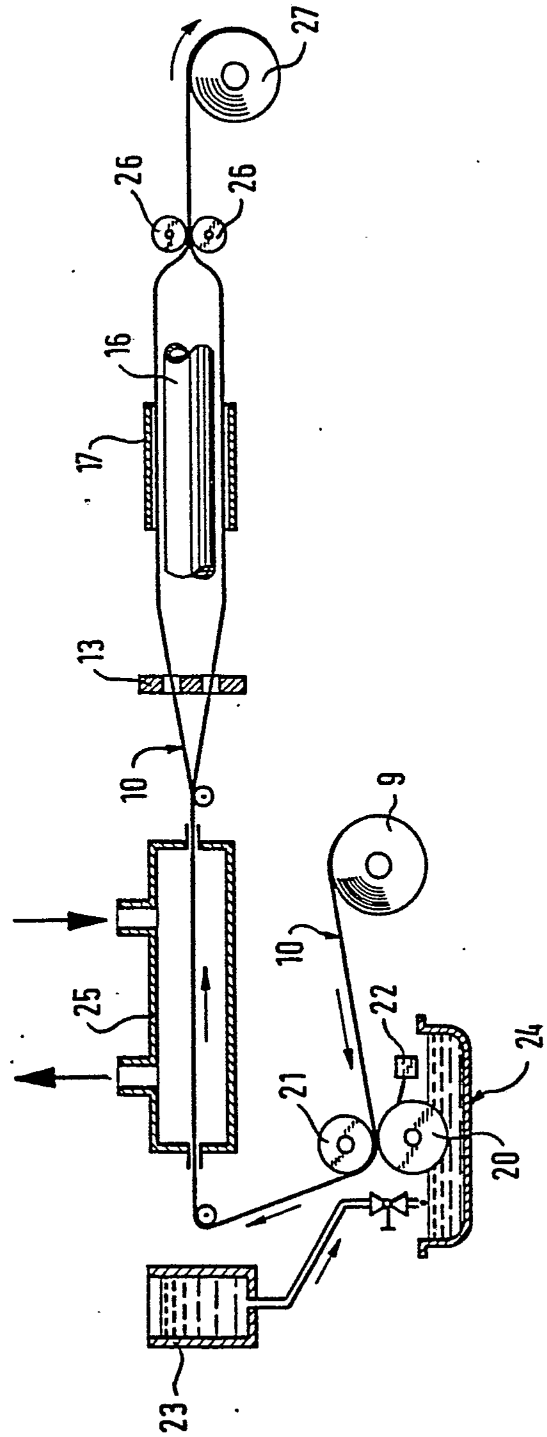


Fig. 8

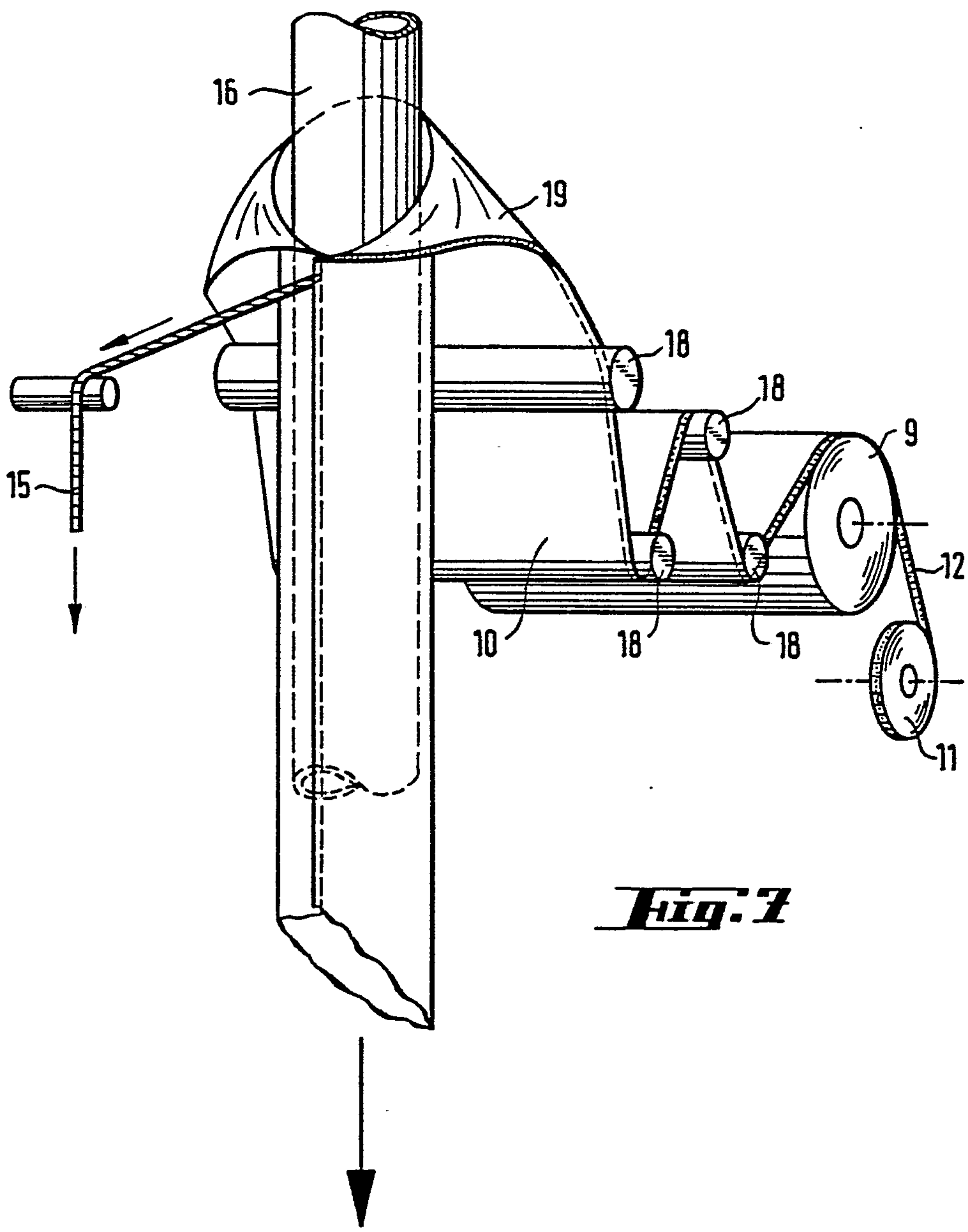


Fig. 7